(19) **Europäisches Patentamt**
**European Patent Office**
**Office européen des brevets**

(11) **EP 4 111 165 B1**

(12) **FASCICULE DE BREVET EUROPEEN**

(45) Date de publication et mention de la délivrance du brevet:
**19.11.2025 Bulletin 2025/47**

(21) Numéro de dépôt: **21703489.1**

(22) Date de dépôt: **11.02.2021**

(51) Classification Internationale des Brevets (IPC):
**G01N 15/00** $^{(2024.01)}$    **G01N 15/02** $^{(2024.01)}$
**G01N 15/0205** $^{(2024.01)}$    **G01N 15/06** $^{(2024.01)}$
**G01N 21/33** $^{(2006.01)}$

(52) Classification Coopérative des Brevets (CPC):
**G01N 15/06; G01N 15/0205; G01N 21/33;**
G01N 15/075; G01N 2015/0046

(86) Numéro de dépôt international:
**PCT/EP2021/053315**

(87) Numéro de publication internationale:
**WO 2021/170413 (02.09.2021 Gazette 2021/35)**

(54) **PROCEDE ET SYSTEME POUR LA MESURE OPTIQUE D'UNE CARACTERISTIQUE DE PARTICULES PRESENTES DANS UN MILIEU GAZEUX**

VERFAHREN UND SYSTEM ZUR OPTISCHEN MESSUNG EINER EIGENSCHAFT VON PARTIKELN IN EINEM GASFÖRMIGEN MEDIUM

METHOD AND SYSTEM FOR THE OPTICAL MEASUREMENT OF A PROPERTY OF PARTICLES PRESENT IN A GASEOUS MEDIUM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.02.2020 FR 2001828**

(43) Date de publication de la demande:
**04.01.2023 Bulletin 2023/01**

(73) Titulaire: **IFP Energies nouvelles**
**92500 Rueil-Malmaison (FR)**

(72) Inventeurs:
- **LECOMPTE, Matthieu**
**92852 RUEIL-MALMAISON CEDEX (FR)**
- **RAUX, Stephane**
**92852 RUEIL-MALMAISON CEDEX (FR)**
- **SCHIFFMANN, Philipp**
**92852 RUEIL-MALMAISON CEDEX (FR)**
- **LEFEVRE, Guillaume**
**92852 RUEIL-MALMAISON CEDEX (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
**EP-A2- 1 640 707    WO-A1-2019/020326**

- **BESCOND A ET AL: "Soot optical properties determined by analyzing extinction spectra in the visible near-UV: Toward an optical speciation according to constituents and structure", JOURNAL OF AEROSOL SCIENCE, ELSEVIER, AMSTERDAM, NL, vol. 101, 6 August 2016 (2016-08-06), pages 118 - 132, XP029732180, ISSN: 0021-8502, DOI: 10.1016/ J.JAEROSCI.2016.08.001**
- **YON JÉRÔME ET AL: "Effects of multiple scattering on radiative properties of soot fractal aggregates", JOURNAL OF QUANTITATIVE SPECTROSCOPY AND RADIATIVE TRANSFER, ELSEVIER SCIENCE, OXFORD, GB, vol. 133, 7 September 2013 (2013-09-07), pages 374 - 381, XP028779449, ISSN: 0022-4073, DOI: 10.1016/ J.JQSRT.2013.08.022**

EP 4 111 165 B1

**Description**

**Domaine technique**

La présente invention concerne la mesure d'une caractéristique relative à des particules présentes dans un milieu gazeux.

La présente invention s'applique avantageusement et non limitativement au domaine de la dépollution des gaz d'échappement de moteurs ou de fumées industrielles et au domaine de la surveillance des émissions polluantes des gaz d'échappement de moteurs ou de fumées industrielles. La présente invention peut en outre s'appliquer au domaine de la surveillance de la qualité de l'air et de la dépollution de l'air.

**Technique antérieure**

Les normes d'émission de substances polluantes issues de la combustion dans des moteurs thermiques requièrent dorénavant, dans la plupart des cas, la réduction des concentrations de ces substances, par exemple à l'aide de traitements catalytiques post combustion.

Les substances polluantes dans les gaz d'échappement sont classiquement des hydrocarbures imbrûlés ou partiellement oxygénés, le monoxyde de carbone (CO), le monoxyde d'azote (NO) et le dioxyde d'azote (NO2) communément désignés sous l'acronyme NOX, le protoxyde d'azote N2O, l'ammoniac (NH3), les composés soufrés tel que le sulfure d'hydrogène (H2S) ou les oxydes de soufre comme le dioxyde de soufre (SO2), l'ozone (O3), etc. Certaines de ces substances font l'objet de réglementations strictes, selon lesquelles des concentrations limites doivent être respectées lors du rejet à l'atmosphère. Les NOx par exemple ont un impact néfaste directement sur la santé de l'être humain et indirectement par la formation secondaire d'ozone troposphérique.

La combustion de carburant dans les moteurs thermiques est aussi une source d'émission de particules, telles que les particules fines riches en HAP (hydrocarbures aromatiques polycycliques), mais aussi les particules de suie, les particules métalliques, les particules issues de processus de nucléation à partir de plusieurs types d'espèces chimiques volatiles, ou encore une combinaison de ces différents types de particules. Ces particules peuvent avoir des tailles allant du nanomètre à plusieurs centaines de nanomètres, voire dépasser le micromètre. Ces particules, et notamment celles émises par des moteurs thermiques de type Diesel, peuvent être à l'origine d'affections respiratoires et être aussi cancérogènes. Ainsi les normes actuelles requièrent pour les véhicules à motorisation Diesel et Essence, de ne pas dépasser $6.10^{11}$ particules (de plus de 23 nm) par $cm^3$ d'aérosol, lequel est conditionné préalablement à la mesure de façon à en retirer la fraction volatile. Ainsi, les normes d'émission de substances polluantes des moteurs thermiques requièrent dans la plupart des cas la réduction des concentrations par post-traitement par filtration et/ou par catalyse.

Par ailleurs, des particules peuvent également être présentes dans l'atmosphère ou l'air ambiant, et avoir de nombreuses origines et/ou résulter de processus d'évolution complexes faisant intervenir des phénomènes de transport sur de larges échelles et de transformation photochimique notamment. Ces particules, dont les sources sont très nombreuses depuis les diverses activités humaines jusqu'à l'érosion des sols par exemple, présentent une très grande variabilité de taille, allant du nanomètre à plusieurs dizaines de micromètres, et une très grande variabilité de composition qui peut être organique et/ou inorganique. En particulier, les particules fines représentent l'un des principaux facteurs de risque liés à la pollution de l'air en milieu urbain de développer un cancer. Les particules fines peuvent se révéler particulièrement toxiques car elles pénètrent profondément les poumons et l'arbre bronchique.

Dans le domaine de la mesure de la teneur en particules contenues dans un milieu gazeux tel que des gaz d'échappement, on connait les dispositifs PPS et PPS-M de la société PEGASOR (Finlande) qui sont des analyseurs de particules haute dynamique, permettant notamment d'accéder à l'estimation de la concentration en masse et en nombre de particules de manière embarquée ou déportée. Le principe de mesure consiste à charger électroniquement les particules passant à travers le capteur et à mesurer ensuite le courant de fuite par unité de temps quand les particules chargées quittent le capteur. Toutefois, ce dispositif ne permet pas de mesurer d'autres substances polluantes, notamment des concentrations en NOx, en BTEX (benzène, toluène, ethylbenzene, xylènes), $SO_2$, $H_2S$, etc. Par ailleurs, ce dispositif ne permet pas de mesurer la taille des particules. Par ailleurs, de par son encombrement, il ne peut pas être embarqué aisément, par exemple dans une ligne d'échappement d'un véhicule.

On connait le document DE 102017204 037 A1 qui concerne un capteur optique pour la détermination de la concentration d'un constituant d'un fluide, comprenant en outre un capteur d'encrassement pour qualifier l'encrassement des optiques et ainsi corriger la mesure de la concentration d'un constituant d'un fluide. En outre, ce document enseigne la détermination de la concentration et de la taille de particules à partir d'une estimation du phénomène de diffusion (et non pas à la fois d'absorption et de diffusion, ce qui correspond au phénomène d'extinction) engendré par la présence par exemple de suie sur la fenêtre optique. Le procédé décrit dans ce document suppose pour ce faire un encrassement homogène des optiques pour déterminer la correction à apporter au signal du capteur optique. De plus, ce procédé requiert une mesure utilisant une large gamme de longueurs d'onde, ainsi que deux mesures sous au moins deux angles différents, ce qui peut être contraignant, par exemple dans le cas d'une mesure dans une ligne d'échappement. Par ailleurs, il apparait difficile de détecter de faibles concentrations de particules et de petites particules dans un milieu gazeux à partir de ce procédé, du fait que seule la diffusion est prise en compte.

On connait aussi le document DE 102009054594 A1 qui concerne un dispositif et un procédé de détermination de la granulométrie et/ou de la concentration en particules d'un gaz en circulation comportant des particules, notamment un gaz issu d'un système d'échappement d'un véhicule automobile. Plus précisément, le dispositif décrit dans ce document peut comprendre une source lumineuse d'un rayonnement UV et un spectromètre. Le procédé décrit dans ce document exploite le fait que l'intensité lumineuse diffusée (et non pas absorbée et diffusée, ce qui correspond au phénomène d'extinction) à un angle prédéterminé dépend du rapport entre la longueur d'onde et la taille des particules. Ainsi, le procédé décrit dans ce document nécessite des mesures réalisées à des angles distincts entre la source lumineuse et le spectromètre, ce qui peut être contraignant, par exemple dans le cas d'une mesure dans une ligne d'échappement. Par ailleurs, ce procédé ne permet pas de mesurer simultanément une concentration en une espèce chimique gazeuse.

On connait également le document EP 1640707 A1 qui concerne un appareil pour surveiller les gaz d'échappement d'un moteur, comprenant une source de rayonnement UV et un détecteur de la quantité de rayonnement émis par la source et ayant traversé une chambre de mesure. Ce document exploite en particulier l'atténuation du rayonnement engendré par la présence de particules, atténuation mesurée pour au moins deux longueurs d'onde différentes. Par ailleurs, ce document décrit que les au moins deux longueurs d'onde différentes sont des longueurs d'onde auxquelles l'atténuation du rayonnement électromagnétique provoquée par la présence de dioxyde d'azote ($NO_2$) dans l'échappement est sensiblement la même. Ainsi, de manière générale, ce document décrit un opacimétre qui peut corriger l'effet de l'absorbance du $NO_2$ sur la mesure de la concentration en suie. Pour déterminer une taille de particules, ce document repose sur la théorie de Mie qui suppose des particules de forme sphérique, ce qui est éloigné de la forme des suies qui se présentent plutôt comme des agrégats complexes. Par ailleurs, ce procédé ne décrit pas la mesure du nombre de particules (ce qui est important car demandé dans les normes actuelles). De plus, la correction avec le $NO_2$ sur des longueurs d'onde ponctuelles peut s'avérer compliqué lors de la présence d'autres interférents sur ces longueurs d'ondes ($NO$, $NH_3$... par exemple).

On connait en outre le document WO2019/020326 qui concerne un procédé pour la mesure optique in situ de la concentration d'espèces chimiques gazeuses contenues dans des gaz d'échappement et de la température de tels gaz d'échappement, au moyen d'un seul et même système de mesure optique. Plus précisément, le procédé décrit dans ce document comprend l'émission par une source lumineuse d'un rayonnement UV à travers les gaz d'échappement circulant dans une ligne d'échappement, la détection par un spectromètre d'au moins une partie dudit rayonnement UV ayant traversé les gaz d'échappement, la génération d'un signal numérique de l'intensité lumineuse en fonction de la longueur d'onde de ladite partie du rayonnement UV ayant traversé les gaz d'échappement, et l'estimation de la concentration de ladite espèce chimique et de la température des gaz d'échappement à partir du signal numérique. Toutefois, ce procédé ne décrit pas la mesure d'une caractéristique de particules qui seraient présentes dans le milieu gazeux.

On connaît également le document:
A. Bescond, J. Yon, F.-X. Ouf, C. Rozé, A. Coppalle, P. Parent, D. Ferry, C. Laffon, Soot optical properties determined by analyzing extinction spectra in the visible near-UV: Toward an optical spéciation according to constituents and structure, Journal of Aerosol Science, Volume 101, 2016, Pages 118-132, ISSN 0021-8502, https://doi.Org/10.1016/j.jaeros ci.2016.08.001, qui concerne un procédé de détermination de propriétés optiques de la suie par une analyse du spectre d'extinction dans l'UV proche.

Le procédé et le dispositif selon l'invention visent à pallier ces inconvénients. En effet, le procédé et le dispositif selon l'invention permettent la mesure d'une caractéristique de particules présentes dans un milieu gazeux, basé sur une exploitation des phénomènes d'absorption et de diffusion engendrés par les particules. De plus, le procédé et le dispositif selon l'invention ne nécessitent pas des mesures sous des angles différents, ce qui permet une plus grande compacité du dispositif, qui peut alors être plus facilement embarqué, par exemple dans une ligne d'échappement.

De plus, le procédé selon l'invention permet, au moyen d'une unique mesure optique, la détermination à la fois d'une caractéristique des particules présentes dans un milieu gazeux et la concentration en espèces chimiques gazeuses contenues dans ce milieu gazeux.

De plus, ces mesures peuvent être avantageusement réalisées in situ, et sans nécessiter d'étape de surconcentration des particules et/ou des espèces chimiques présentes en faibles quantités dans le gaz à analyser. Avantageusement, lorsqu'une mesure de la concentration en espèces gazeuses est réalisée, le procédé selon l'invention peut permettre en outre une mesure de la température du gaz au moyen de la même mesure optique.

**Résumé de l'invention**

L'invention concerne un procédé pour la mesure d'au moins une caractéristique de particules présentes dans un milieu gazeux, au moyen au moins d'un système de mesure optique, ladite au moins une caractéristique de particules étant choisie parmi une concentration en nombre desdites particules et une taille moyenne desdites particules, ledit système de mesure optique comprenant au moins une source lumineuse et un spectromètre. Le procédé comprend au moins les étapes suivantes :

a) l'émission par la source lumineuse d'un rayonnement UV à travers ledit milieu gazeux dans une zone de mesure ;

b) la détection par ledit spectromètre d'au moins une partie dudit rayonnement UV ayant traversé ledit milieu gazeux dans ladite zone de mesure et la génération d'un signal numérique de l'intensité lumineuse en fonction de la longueur d'onde de ladite partie du rayonnement UV ayant traversé ledit milieu gazeux ;

c) l'estimation d'au moins ladite caractéristique desdites particules présentes dans ledit milieu gazeux de la manière suivante :

i) à partir au moins dudit signal numérique de l'intensité lumineuse en fonction de la longueur d'onde, on détermine une courbe représentative des variations d'un coefficient d'extinction de la loi de Beer-Lambert en fonction de la longueur d'onde pour ledit milieu gazeux comportant lesdites particules ; et

ii) on détermine la valeur de ladite caractéristique en minimisant un écart entre ladite courbe représentative des variations d'un coefficient d'extinction de la loi de Beer-Lambert et un modèle de variations de référence du coefficient d'extinction de loi de Beer-Lambert en fonction de la longueur d'onde et d'au moins ladite caractéristique.

Selon une mise en œuvre de l'invention, on peut déterminer ladite courbe représentative des variations d'un coefficient d'extinction de la loi de Beer-Lambert en fonction de la longueur d'onde selon une formule du type :

$$K_{ext}^{exp}(\lambda) = -\frac{1}{L}\ln\left(\frac{I_s(\lambda)}{I_0(\lambda)}\right)$$

où L est la longueur du chemin optique suivi par ledit rayonnement entre ladite source lumineuse et ledit spectromètre, $\lambda$ est ladite longueur d'onde, $I_s(\lambda)$ est ledit signal numérique de ladite intensité lumineuse en fonction de la longueur d'onde de ladite partie dudit rayonnement UV ayant traversé ledit milieu gazeux, et $I_0(\lambda)$ est un signal numérique de référence de l'intensité lumineuse en fonction de la longueur d'onde.

Selon une mise en œuvre de l'invention selon laquelle ladite caractéristique correspond à une concentration en nombre desdites particules, on peut construire ledit modèle de variations de référence du coefficient d'extinction de loi de Beer-Lambert en fonction de la longueur d'onde et de ladite concentration en nombre de la manière suivante : on détermine une pluralité de courbes représentatives des variations du coefficient d'extinction de loi de Beer-Lambert en fonction de la longueur d'onde pour une pluralité d'échantillons dudit milieu gazeux comprenant des particules ayant des concentrations de particules et des distributions de taille de particules distinctes ; on détermine une courbe $\overline{C_{ext}^{ref}}(\lambda)$ représentative des variations moyennes d'une section efficace d'extinction en fonction de la longueur d'onde $\lambda$ à partir au moins de ladite pluralité de courbes et desdites concentrations en particules desdits échantillons ; on construit ledit modèle d'extinction de référence $K_{ext}^{ref}(\lambda, N)$ en fonction de ladite longueur d'onde $\lambda$ et de la dite concentration en particules N selon une formule du type :

$$K_{ext}^{ref}(\lambda, N) = N.\overline{C_{ext}^{ref}}(\lambda)$$

Alternativement, on peut construire un modèle de variations de référence du coefficient d'extinction de loi de Beer-Lambert en fonction de la longueur d'onde et de ladite concentration en nombre et/ou de taille moyenne desdites particules selon la théorie de Rayleigh-Debye-Gans pour les agrégats fractals.

Selon une mise en œuvre de l'invention selon laquelle ladite caractéristique est ladite concentration en nombre desdites particules, on peut construire ledit modèle de variations de référence du coefficient d'extinction $K_{ext}^{RDG-FA}(\lambda, N_{agg})$ en fonction de la longueur d'onde $\lambda$ et de ladite concentration en nombre $N_{agg}$ à partir d'une formule du type : $K_{ext}^{RDG-FA}(\lambda, N_{agg}) = N_{agg}.C_{ext}^{RDG-FA}(\lambda)$, où $C_{ext}^{RDG-FA}(\lambda)$ est une section efficace d'extinction de la théorie de Rayleigh-Debye-Gans pour les agrégats fractals.

Selon une mise en œuvre de l'invention selon laquelle ladite caractéristique est ladite taille moyenne desdites particules, on peut construire ledit modèle de variations de référence du coefficient d'extinction $K_{ext}^{RDG-FA}\left(\lambda,\overline{N_p}\right)$ en fonction de la longueur d'onde $\lambda$ et de ladite taille moyenne $\overline{N_p}$ des particules exprimée en nombre de sphérules primaires constituant les agrégats à partir d'une formule du type :

$$K_{ext}^{RDG-FA}\left(\lambda,\overline{N_p}\right) = \frac{4\pi x_p^3}{k^2} E(m) N_{agg} \overline{N_p}$$

où $N_{agg}$ est la concentration en nombre, $x_p = \frac{\pi D_p}{\lambda}$, $k = \frac{2\pi}{\lambda}$, $D_p$ est un paramètre relatif à la morphologie fractale desdites particules, *E(m)* est un paramètre relatif aux propriétés optiques d'absorption desdites particules.

Selon une mise en œuvre de l'invention, on peut construire ledit modèle de variations de référence du coefficient d'extinction $K_{ext}^{RDG-FA}\left(\lambda,N_{agg},\overline{N_p}\right)$ en fonction de la longueur d'onde $\lambda$, de ladite concentration en nombre $N_{agg}$ et de ladite taille moyenne $\overline{N_p}$ des particules exprimée en nombre de sphérules primaires constituant les agrégats à partir d'une formule du type : $K_{ext}^{RDG-FA}\left(\lambda,N_{agg},\overline{N_p}\right) = \frac{4\pi x_p^3}{k^2} E(m) N_{agg} \overline{N_p}$, où $x_p = \frac{\pi D_p}{\lambda}$, $k = \frac{2\pi}{\lambda}$, $D_p$ est un paramètre relatif à la morphologie fractale desdites particules, *E(m)* est un paramètre relatif aux propriétés optiques d'absorption desdites particules.

Selon une mise en œuvre de l'invention, à l'étape c), on peut déterminer en outre une concentration d'au moins une espèce chimique gazeuse contenue dans ledit milieu gazeux (10) de la manière suivante :

- on détermine une absorbance (A) dudit milieu gazeux en fonction de la longueur d'onde à partir au moins dudit signal numérique de l'intensité lumineuse (50) en fonction de la longueur d'onde de ladite partie du rayonnement UV ayant traversé ledit milieu gazeux (43) et d'un signal numérique de référence de l'intensité lumineuse en fonction de la longueur d'onde ;

- on détermine ladite concentration de ladite au moins une espèce chimique à partir de ladite absorbance (A) dudit milieu gazeux et de caractéristiques prédéterminées d'absorbance, de température et de pression de ladite espèce chimique.

Selon une mise en œuvre de l'invention, on peut mesurer ladite concentration d'au moins une, et de préférence plusieurs, espèces chimiques gazeuses contenues dans ledit milieu gazeux, et comprises dans la liste constituée par : NO, $NO_2$, $N_2O$, BTEX, $SO_2$, $H_2S$, $O_3$, $O_2$, $H_2O$, les aldéhydes comme l'acétaldéhyde ou le formaldéhyde, des hydrocarbures non aromatiques comme l'acétylène ou le buta-1,3-diène.

Selon une mise en œuvre de l'invention, à l'étape c), on peut déterminer en outre la température (T) dudit milieu gazeux à partir dudit signal numérique (50) par modification du coefficient d'extinction molaire de l'absorbance de ladite espèce chimique extraite de l'absorbance (A) dudit milieu gazeux, ladite modification étant un décalage de la longueur d'onde ou une modification de l'amplitude ou une combinaison des deux.

Selon une mise en œuvre de l'invention, ledit rayonnement UV (42) émis peut avoir une longueur d'onde comprise entre 180 et 400 nm, de préférence comprise entre 190 et 250 nm.

Selon une mise en œuvre de l'invention, ledit milieu gazeux peut correspondre à des gaz d'échappement et ladite zone de mesure correspond à un conduit dans lequel circule lesdits gaz d'échappement.

Selon une mise en œuvre de l'invention, le procédé peut comporter une étape préalable de calibration dudit système de mesure optique pour fournir un signal numérique de référence de l'intensité lumineuse en fonction de la longueur d'onde, de préférence par émission dudit rayonnement UV à travers un gaz de référence, et par détection d'au moins une partie dudit rayonnement UV ayant traversé ledit gaz de référence pour fournir un signal numérique de référence de l'intensité lumineuse en fonction de la longueur d'onde de ladite partie du rayonnement UV ayant traversé ledit gaz de référence.

L'invention concerne en outre un système pour la mesure d'au moins une caractéristique de particules présentes dans un milieu gazeux mettant en œuvre le procédé pour la mesure optique d'au moins une caractéristique de particules contenues dans un milieu gazeux tel que décrit ci-dessus, ledit système comportant :

- une source lumineuse susceptible d'émettre un rayonnement UV à travers ledit gaz au sein d'une zone de mesure ;

- un spectromètre susceptible de détecter au moins une partie dudit rayonnement UV ayant traversé ledit gaz dans ladite zone de mesure et la génération d'un signal numérique de l'intensité lumineuse en fonction de la longueur d'onde de ladite partie du rayonnement UV ayant traversé ledit gaz; et
- des moyens pour le traitement et l'analyse dudit signal pour déterminer au moins ladite caractéristique desdites particules présentes dans ledit gaz à partir au moins dudit signal numérique

D'autres objets et avantages de l'invention apparaîtront à la lecture de la description qui suit d'exemples de réalisations particuliers de l'invention, donnés à titre d'exemples non limitatifs, la description étant faite en référence aux figures annexées décrites ci-après.

**Liste des figures**

La figure 1A est un schéma illustrant la mesure optique d'au moins une caractéristique de particules dans un gaz s'écoulant dans un conduit, selon une configuration transmissive du système de mesure optique pour la mise en œuvre du procédé selon l'invention.

La figure 1B est un schéma illustrant la mesure optique d'au moins une caractéristique de particules dans un gaz s'écoulant dans un conduit, selon une configuration réflective du système de mesure optique pour la mise en œuvre du procédé selon l'invention.

La figure 1C est un schéma illustrant la mesure optique d'au moins une caractéristique de particules dans un milieu gazeux ambiant, selon une configuration réflective du système de mesure optique pour la mise en œuvre du procédé selon l'invention.

La figure 1D est un schéma illustrant la mesure optique d'au moins une caractéristique de particules dans un milieu gazeux ambiant, selon une configuration réflective du système de mesure optique pour la mise en œuvre du procédé selon l'invention.

La figure 2 représente schématiquement l'absorbance du gaz comportant différentes espèces chimiques gazeuses A, B, C que l'on souhaite mesurer.

La figure 3 représente schématiquement l'influence de la température sur l'absorbance d'une espèce chimique donnée contenue dans le milieu gazeux.

Les figures 4 à 14 sont des schémas illustrant différents modes de réalisation du système de mesure optique pour la mise en œuvre du procédé selon une mise en œuvre de l'invention selon laquelle le milieu gazeux ou le mélange de gaz circule dans un conduit tel qu'une ligne d'échappement.

Les figures 15 à 18 illustrent les différentes étapes de la première variante du procédé selon l'invention appliquées à un milieu gazeux issu de la combustion d'un moteur de type Diesel comportant des particules sous forme de suies.

La figure 19 présente une concentration en nombre de particules déterminée par le procédé selon la première variante de l'invention, comparée à une concentration en nombre de particules de référence.

La figure 20 illustre des résultats de la deuxième variante du procédé selon l'invention appliquée à un milieu gazeux issu de la combustion d'un moteur de type Diesel comportant des particules sous forme de suies.

**Description des modes de réalisation**

Selon un premier aspect, l'invention concerne un procédé pour la mesure d'au moins une caractéristique de particules contenues dans un milieu gazeux, au moyen d'un système de mesure optique.

Par particules, on entend tout corps solide ou liquide de dimension inférieure à 100 µm, avec éventuellement une phase volatile pouvant être adsorbée sur une phase solide. De manière non limitative, les particules selon l'invention peuvent correspondre à des particules de suie qui sont des particules fines (micrométriques, submicroniques et nanométriques) riches en HAP (hydrocarbures aromatiques polycycliques), mais aussi des particules provenant de l'abrasion de pièces comme par exemple des particules métalliques issues de plaquettes de frein, des particules provenant de l'abrasion de pneus, mais aussi des pollens, etc. En particulier, le procédé selon l'invention s'applique avantageusement à la détermination d'une caractéristique de nanoparticules contenues dans un milieu gazeux. Selon la norme ISO TS 80004-1, un nanomatériau est un matériau dont au moins une dimension externe est à l'échelle nanométrique, c'est-à-dire comprise approximativement entre 1 et 100 nm ou qui possède une structure interne ou de surface à l'échelle nanométrique. Parmi les nanomatériaux, figurent les nanoparticules qui désignent des nano-objets dont les trois dimensions externes se situent à l'échelle nanométrique.

Par milieu gazeux, on entend un gaz ou un mélange de plusieurs gaz. L'invention peut en particulier s'appliquer à un aérosol, qui correspond à un ensemble de fines particules en suspension dans un milieu gazeux.

Le procédé selon l'invention est mis en œuvre au moins au moyen d'un système de mesure optique comprenant au moins une source lumineuse et un spectromètre.

Le procédé selon l'invention comprend au moins les étapes 1) à 3) suivantes :

1) l'émission par la source lumineuse d'un rayonnement UV à travers le milieu gazeux d'intérêt dans une zone de mesure ;
2) la détection par le spectromètre d'au moins une partie dudit rayonnement UV ayant traversé ledit milieu gazeux dans ladite zone de mesure et la génération d'un signal numérique de l'intensité lumineuse en fonction de la longueur d'onde de ladite partie du rayonnement UV ayant traversé ledit milieu gazeux ;
3) la détermination d'au moins une caractéristique des particules présentes dans ledit milieu gazeux à partir au moins du signal numérique de l'intensité lumineuse.

Selon un deuxième aspect, l'invention concerne un système pour la mesure optique d'au moins une caractéristique de particules présentes dans un milieu gazeux. Le système selon l'invention comprend au moins un système optique comportant au moins :

- une source lumineuse susceptible d'émettre un rayonnement UV à travers le milieu gazeux au sein d'une zone de mesure ;
- un spectromètre susceptible de détecter au moins une partie du rayonnement UV ayant traversé le milieu gazeux dans la zone de mesure et la génération d'un signal numérique de l'intensité lumineuse en fonction de la longueur d'onde de la partie du rayonnement UV ayant traversé le milieu gazeux.

De plus, le système selon l'invention comprend en outre des moyens pour le traitement et l'analyse du signal numérique (par exemple par voie informatique à l'aide d'un microprocesseur) pour déterminer au moins une caractéristique des particules présentes dans le milieu gazeux à partir dudit signal numérique, notamment selon l'une quelconque des variantes de l'étape 3 du procédé selon l'invention décrites ci-dessous.

Avantageusement, le système pour la mesure optique d'au moins une caractéristique de particules présentes dans un milieu gazeux comprend en outre des moyens pour la transmission (par exemple par voie filaire électrique, par fibre optique ou par un système de communication sans fil) des mesures réalisées au moyen dudit système optique auxdits moyens pour le traitement et l'analyse du signal numérique.

De manière générale, la caractéristique des particules à mesurer peut être la concentration en particules (par exemple mesurée en nombre de particules par unité de volume de gaz), une caractéristique de la distribution de taille des particules présentes dans le milieu gazeux (par exemple le diamètre moyen d'une distribution de taille de type log-normale, ou encore l'écart-type d'une telle distribution de taille), ou encore les propriétés optiques des particules.

Selon l'invention, au moins une caractéristique des particules est choisie parmi une concentration en nombre des particules et une taille moyenne des particules.

Selon une mise en œuvre de l'invention, le milieu gazeux comprenant les particules dont on cherche à mesurer une caractéristique correspond à des gaz d'échappement, s'écoulant par exemple dans un conduit tel qu'une ligne d'échappement. Les gaz d'échappement peuvent être issus d'un moteur à combustion interne, notamment, mais pas exclusivement, pour véhicule automobile. Mais de manière plus générale, on entend par gaz d'échappement de cette première mise en œuvre de l'invention tous les autres types de gaz d'échappement résultant d'une combustion, comme ceux issus de chaudières ou de fours, et circulant dans une cheminée ou un conduit d'évacuation pouvant intégrer le système de mesure optique selon l'invention. La présente invention peut ainsi avantageusement s'appliquer aux fumées industrielles comprenant des particules dont on souhaite mesurer une caractéristique.

Selon une autre mise en œuvre de l'invention, le milieu gazeux comprenant les particules dont on cherche à mesurer une caractéristique correspond à un milieu gazeux ambiant, tel que l'air ambiant, présent en extérieur (zones proches de réseaux routiers ou ferroviaire, industries polluantes, etc...) ou dans un espace confiné ou semi-confiné (parking souterrain, espaces dans lesquels se trouvent des employés exposés à des particules au moins temporairement, etc...).

Selon l'invention, la zone de mesure peut être fermée (et peut alors par exemple correspondre à une portion d'un conduit telle qu'une portion d'une ligne d'échappement) ou bien ouverte (et peut alors être définie par le volume d'un cylindre formé par le rayonnement UV entre la source lumineuse de rayonnement UV et le spectromètre.).

Le procédé selon l'invention permet une mesure in situ, par exemple directement dans le conduit dans lequel circule le gaz ou le mélange de gaz, ou bien directement dans le milieu gazeux ambiant, et sans prélèvement d'échantillon(s) des gaz ni transformation ou pré-conditionnement du gaz. Notamment, le procédé selon l'invention ne requiert pas une transformation de particules non mesurables en particules mesurables.

Par ailleurs le procédé selon l'invention est non intrusif (par exemple, il permet de ne pas modifier l'écoulement du gaz tel que des gaz d'échappement) et d'être instantané, par exemple avec un temps de réponse pouvant être inférieur à 0,1 s.

Le système de mesure optique selon l'invention, permettant une mesure in situ, peut être aisément embarqué dans ou sur un véhicule, ou tout autre engin mobile. Selon une mise en œuvre de l'invention, le système de mesure optique peut être embarqué dans une ligne d'échappement de gaz d'échappement issus d'un moteur à combustion interne.

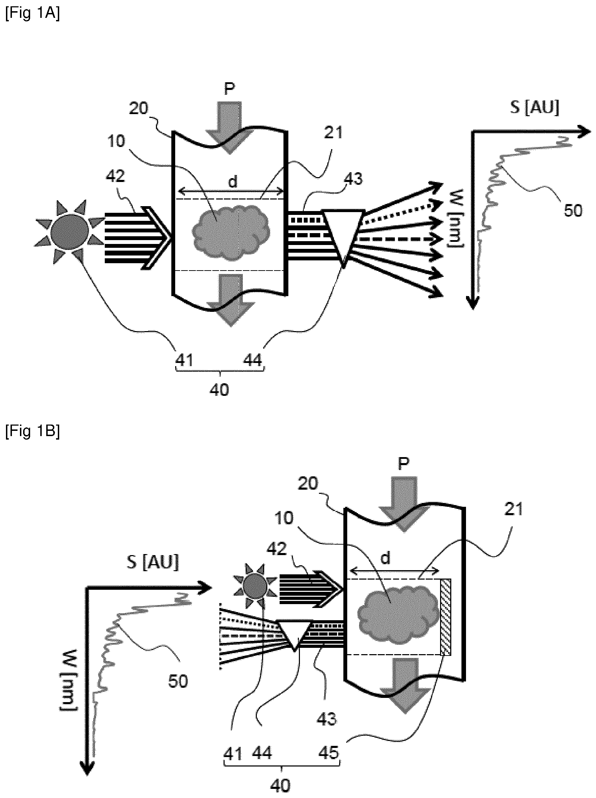

Les figures 1A et 1B représentent schématiquement le principe du procédé et du système de mesure dans le cas d'une zone de mesure correspondant à une portion d'un conduit (tel qu'une ligne d'échappement) dans laquelle circule un gaz ou un mélange de gaz (tel que des gaz d'échappement). La figure 1A diffère de la figure 1B par le système de mesure optique, qui est selon une configuration transmissive dans la figure 1A et selon une configuration réflective dans la figure 1B. Le procédé selon cette mise en œuvre de l'invention comporte au moins les étapes suivantes :

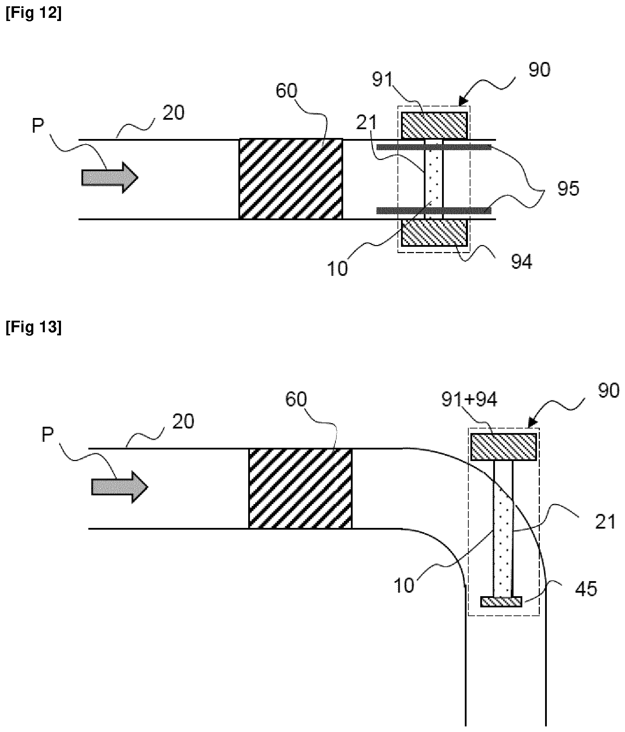

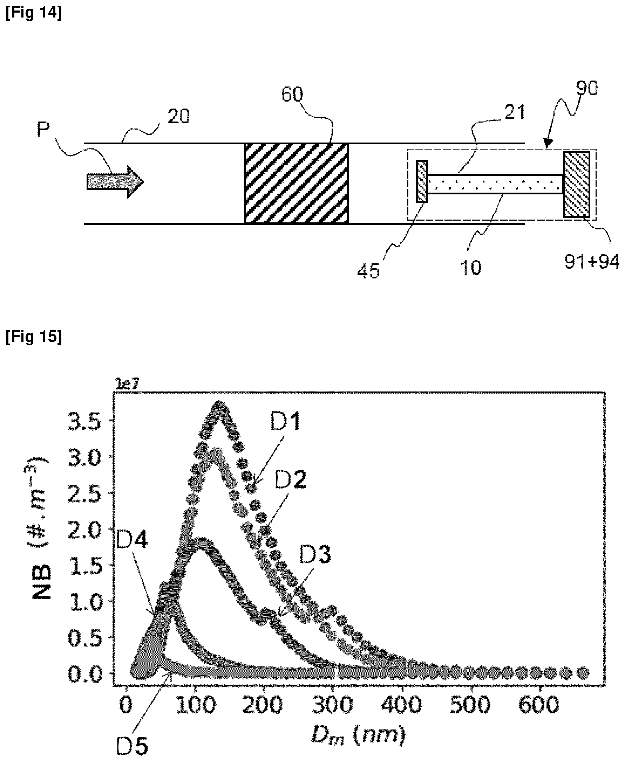

- l'émission par la source lumineuse 41 d'un rayonnement UV 42 à travers le gaz 10 circulant au sein d'une zone de mesure 21 située dans un conduit 20. Le rayonnement UV 42 entre dans la zone de mesure 21 située dans le conduit 20 par un accès optique (non représenté), par exemple un hublot ou une lentille. Le rayonnement UV 42 traverse le gaz, selon un chemin optique qui peut être sensiblement perpendiculaire au parcours P du gaz. Dans le cas de de la configuration de la figure 1A, le chemin optique est de longueur d tel que représenté sur la figure 1A. Dans le cas de de la configuration alternative de la figure 1B selon laquelle le système optique comprend un réflecteur positionné tel que décrit en relation avec les figures 13 et 14 plus loin, le chemin optique est de longueur d+d tel que représenté sur la figure 1B.
- la détection par le spectromètre 44 d'au moins une partie 43 du rayonnement UV ayant traversé le gaz dans la zone de mesure 21, et la génération d'un signal numérique 50 de l'intensité lumineuse en fonction de la longueur d'onde de la partie du rayonnement UV ayant traversé le gaz. Le rayonnement UV traversant le gaz comprenant les particules dont on souhaite mesurer une caractéristique subit à la fois une absorption et une diffusion, tel que cela sera décrit ultérieurement. La partie du rayonnement UV ayant traversé le gaz est détectée par le spectromètre 44 à travers un accès optique (non représenté), par exemple un hublot ou une lentille, qui peut être le même accès optique que pour le passage du rayonnement émis par la source lumineuse 41 dans le cas de la configuration de la figure 1B.
- l'estimation d'au moins d'une caractéristique des particules présentes dans le gaz 10 à partir au moins du signal numérique de l'intensité lumineuse 50.

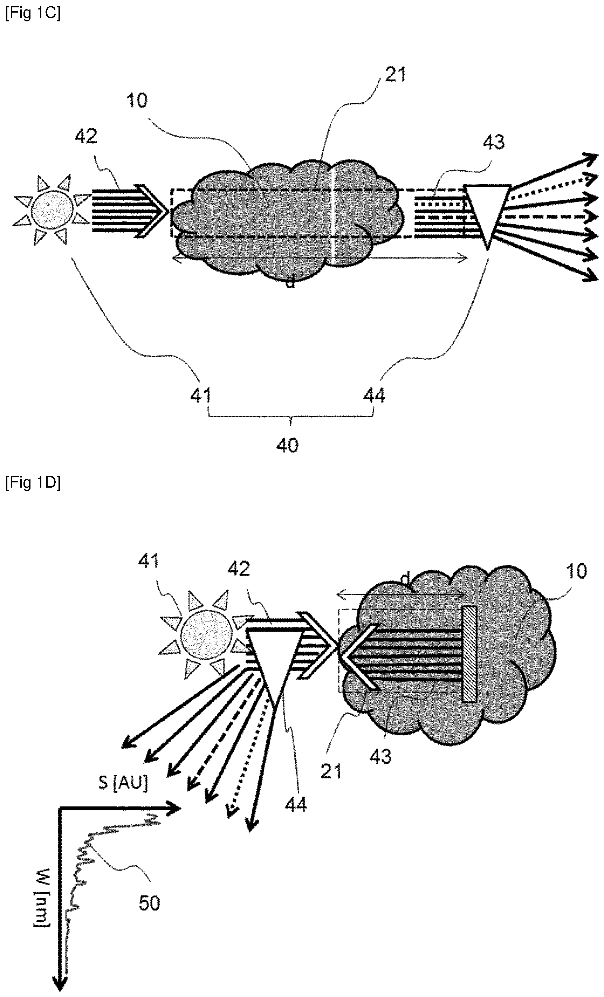

De manière similaire, les figures 1C et 1D représentent schématiquement le principe du procédé et du système de mesure dans d'une zone de mesure correspondant au cylindre formé par le faisceau du rayonnement UV entre la source lumineuse et le spectromètre, zone de mesure dans laquelle est présent un milieu gazeux tel que l'air ambiant. Le procédé selon cette mise en œuvre de l'invention comporte au moins les étapes suivantes :

- l'émission par la source lumineuse 41 d'un rayonnement UV 42 à travers le gaz 10 présent dans une zone de mesure 21 située entre la source lumineuse 41 et le spectromètre 44. Le rayonnement UV 42 traverse le gaz 10 selon un chemin optique. Dans le cas de de la configuration de la figure 1C, le chemin optique est de longueur d. Dans le cas de de la configuration alternative de la figure 1D selon laquelle le système optique comprend un réflecteur positionné tel que décrit en relation avec les figures 13 et 14 plus loin, le chemin optique est de longueur d+d.
- La détection par le spectromètre 44 d'au moins une partie 43 du rayonnement UV ayant traversé le gaz dans la zone de mesure 21, et la génération d'un signal numérique 50 de l'intensité lumineuse en fonction de la longueur d'onde de la partie du rayonnement UV ayant traversé le gaz. Le rayonnement UV traversant le gaz comprenant les particules dont on souhaite mesurer une caractéristique subit à la fois une absorption et une diffusion. La partie du rayonnement UV ayant traversé le gaz est détectée par le spectromètre 44 placé dans l'alignement de la source lumineuse.
- l'estimation d'au moins d'une caractéristique des particules présentes dans le gaz 10 à partir au moins du signal numérique de l'intensité lumineuse 50.

De manière générale, lorsqu'une onde électromagnétique rencontre une particule, deux phénomènes peuvent se produire :

- La particule stocke de l'énergie, c'est le phénomène d'absorption ;
- La particule redistribue spatialement l'énergie : c'est la diffusion.

De plus, la somme de l'absorption et de la diffusion totale (diffusion dans tout l'espace) est définie comme l'extinction. Ces trois phénomènes sont quantifiables grâce à des grandeurs nommées sections efficaces, que l'on note conventionnellement $C_{abs}$, $C_{sca}$, et $C_{exc}$, les indices *abs, sca* et *ext* étant relatifs à l'absorption, la diffusion totale (ou *"scattering"* en anglais) et l'extinction. De manière générale, une section efficace est le rapport entre l'énergie transformée au cours de l'interaction et l'éclairement de la particule (énergie reçue par unité de surface). La présente invention exploite la mesure du phénomène d'extinction (absorption et diffusion) subi par le rayonnement émis par la source lumineuse lorsqu'il traverse un milieu gazeux comprenant des particules.

Selon l'invention, lors de l'étape 3) du procédé selon l'invention, on détermine au moins une caractéristique desdites particules présentes dans le milieu gazeux de la manière suivante :

i) A partir au moins du signal numérique de l'intensité lumineuse en fonction de la longueur d'onde, on détermine une courbe représentative des variations du coefficient d'extinction de la loi de Beer-Lambert en fonction de la longueur d'onde pour le milieu gazeux comportant les particules dont on cherche à déterminer la caractéristique. Selon une mise en œuvre de l'invention, le coefficient d'extinction, noté ci-après $K_{ext}^{exp}$, peut être obtenu selon une formule du type :

$$K_{ext}^{exp}(\lambda) = -\frac{1}{L}\ln\left(\frac{I_s(\lambda)}{I_0(\lambda)}\right) \qquad (1)$$

où L est la longueur du chemin optique, $\lambda$ est la longueur d'onde, $I_s(\lambda)$ est le signal numérique de l'intensité lumineuse en fonction de la longueur d'onde de la partie du rayonnement UV ayant traversé le milieu gazeux mesurée par le spectromètre, et $I_0(\lambda)$ est un signal numérique de référence de l'intensité lumineuse en fonction de la longueur d'onde. Le signal numérique de référence de l'intensité lumineuse en fonction de la longueur d'onde peut être obtenu par émission d'un rayonnement UV, par la source lumineuse selon l'invention, à travers un gaz de référence (c'est-à-dire ne contenant pas de particules ni d'espèces chimiques gazeuses autres que celles composant majoritairement l'air, tel que de l'air filtré, du diazote ou de l'hélium), et par détection, par le spectromètre selon l'invention, d'au moins une partie dudit rayonnement UV ayant traversé ledit gaz de référence. Avantageusement, le procédé selon l'invention peut comporter une étape préalable de calibration du système de mesure optique pour déterminer un signal numérique de référence de l'intensité lumineuse en fonction de la longueur d'onde.

ii) On détermine ladite caractéristique en minimisant un écart entre ladite courbe représentative des variations d'un coefficient d'extinction de la loi de Beer-Lambert et un modèle des variations de référence du coefficient d'extinction de loi de Beer-Lambert en fonction de la longueur d'onde et de la caractéristique d'intérêt. Autrement dit, selon l'invention, on recherche la caractéristique C des particules présentes dans le milieu gazeux d'intérêt permettant de minimiser une fonctionnelle $F(\lambda, C)$ s'exprimant sous la forme :

$$F(\lambda, C) = K_{ext}^{exp}(\lambda) - K_{ext}^{ref}(\lambda, C) \qquad (2)$$

où $K_{ext}^{exp}(\lambda)$ est la courbe représentative des variations du coefficient d'extinction de la loi de Beer-Lambert en fonction de la longueur d'onde mesurée telle que décrit ci-dessus, et $K_{ext}^{ref}(\lambda, C)$ est ledit modèle des variations de référence du coefficient d'extinction de la loi de Beer-Lambert en fonction de la longueur d'onde et de la caractéristique C d'intérêt. Avantageusement, l'étape 3) du procédé selon l'invention peut être mise en œuvre au moyen des moyens pour le traitement et l'analyse du système pour la mesure optique selon l'invention.

Selon cette mise en œuvre préférée de l'invention, le modèle des variations de référence du coefficient d'extinction de la loi de Beer-Lambert en fonction de la longueur d'onde et de la caractéristique C d'intérêt, appelé modèle d'extinction de référence par la suite à des fins de simplification, peut provenir de la littérature, ou bien être obtenu de manière expérimentale, ou bien encore de manière théorique.

Selon une première variante du procédé selon l'invention, on peut déterminer de manière expérimentale un modèle d'extinction de référence en fonction de la concentration en particules de la façon suivante : on détermine une pluralité de courbes représentatives des variations du coefficient d'extinction de loi de Beer-Lambert en fonction de la longueur d'onde pour une pluralité d'échantillons d'un milieu gazeux comprenant des particules ayant des concentrations et des distributions de taille distinctes. Puis on détermine, à partir de cette pluralité de courbes, une courbe $\overline{C_{ext}^{ref}}(\lambda)$ représentative des variations moyennes de la section efficace d'extinction en fonction de la longueur d'onde pour lesdits échantillons ; puis on construit ledit modèle d'extinction de référence en fonction de la concentration en particules $N$ selon une formule du type :

$$K_{ext}^{ref}(\lambda, N) = N.\overline{C_{ext}^{ref}}(\lambda) \qquad (3)$$

Ainsi, selon cette variante du procédé selon l'invention, on détermine une concentration en nombre de particules *N* contenues dans un milieu gazeux en recherchant la concentration *N* permettant de minimiser la fonctionnelle *F*(*λ, N*) suivante :

$$F(\lambda, N) = K_{ext}^{exp}(\lambda) - N.\overline{C_{ext}^{ref}}(\lambda)$$

(4)

où $K_{ext}^{exp}(\lambda)$ est la courbe représentative des variations du coefficient d'extinction de la loi de Beer-Lambert en fonction de la longueur d'onde mesurée pour le milieu gazeux dont on cherche à déterminer la concentration en particules. Avantageusement, on utilise une méthode des moindres carrés, par exemple en l'exécutant sur lesdits moyens pour le traitement et l'analyse, pour réaliser cette minimisation.

Avantageusement, pour la mise en œuvre de la première variante du procédé selon l'invention, on détermine la courbe $\overline{C_{ext}^{ref}}(\lambda)$ représentative de variations moyennes de la section efficace d'extinction en fonction de la longueur d'onde pour lesdits échantillons en appliquant au moins les étapes suivantes :

- On génère une pluralité d'échantillons du milieu gazeux d'intérêt (on parle par la suite de gaz en général, à des fins de simplification) comportant des particules ayant des distribution de taille et concentration en particules distinctes. Dans la suite, chaque échantillon de gaz est référencé par un indice i, avec i variant entre 1 et I, et on note $N_i$ la concentration en nombre de particules. Avantageusement, on génère la pluralité d'échantillons de gaz comprenant des particules au moyen d'un générateur de particules tel que le dispositif CAST 5201D de la société Jing Ltd (Suisse). Avantageusement, on mesure la concentration $N_i$ en nombre de particules pour chacun des échantillons au moyen d'un instrument de mesure de référence, par exemple au moyen du dispositif PPS de la société PEGASOR (Finlande). Avantageusement, le nombre d'échantillons I vaut au moins 2, de préférence 5, et très préférentiellement 10 ;
- On applique les étapes 1) et 2) du procédé selon l'invention à chacun des échantillons de gaz et on détermine, au moyen de la formule (1) ci-dessus, une courbe $K_{ext}^{ref,i}(\lambda)$ représentative des variations du coefficient d'extinction en fonction de la longueur d'onde pour chacun des échantillons de gaz i, avec i variant de 1 à I ;
- A partir de cette pluralité de courbes représentatives des variations du coefficient d'extinction en fonction de la longueur d'onde pour chacun des échantillons de gaz et de la concentration $N_i$ en nombre de particules de chacun des échantillons, on détermine une courbe, notée $C_{ext}^{ref,i}(\lambda)$, représentative des variations de la section efficace d'extinction en fonction de la longueur d'onde pour chacun des échantillons de gaz i, avec i variant de 1 à I, selon une formule du type :

$$C_{ext}^{ref,i}(\lambda) = K_{ext}^{ref,i}(\lambda)/N_i$$

- à partir des courbes de variations des sections efficaces d'extinction $C_{ext}^{ref,i}(\lambda)$ en fonction de la longueur d'onde déterminées pour chacun des échantillons, on détermine une courbe, notée $\overline{C_{ext}^{ref}}(\lambda)$ par la suite, représentative des variations moyennes de la section efficace d'extinction en fonction de la longueur d'onde pour chacun des échantillons considérés. Cette courbe $\overline{C_{ext}^{ref}}(\lambda)$ peut être obtenue en réalisant une moyenne, éventuellement pondérée, des courbes $C_{ext}^{ref,i}(\lambda)$ représentatives des variations de la section efficace d'extinction en fonction de la longueur d'onde pour chacun des échantillons de gaz i, avec i variant de 1 à I.

Selon une deuxième variante du procédé selon l'invention, on peut déterminer un modèle d'extinction de référence en fonction de la concentration en particules et/ou de la taille moyenne des particules de manière théorique, au moyen d'une formule issue de la théorie connue sous l'acronyme RDG-FA (Rayleigh-Debye-Gans for Fractal Aggregates).

De manière générale, on peut trouver une description de la théorie RDG-FA dans le document :
Farias, T. L., Köylü, Ü. Ö., & Carvalho, M. D. G. (1996). Range of validity of the Rayleigh-Debye-Gans theory for optics of fractal aggregates. Applied optics, 35(33), 6560-6567.

Selon cette théorie, le coefficient d'extinction $K_{ext}^{RDG-FA}(\lambda)$ peut s'exprimer selon une formule du type :

$$K_{ext}^{RDG-FA}(\lambda) =$$

$$\frac{4\pi x_p^3}{k^2} E(m) N_{agg} \frac{\int_{D_{min}}^{D_{max}} N_p(D_m).n(D_m).dD_m}{\int_{D_{min}}^{D_{max}} n(D_m).dD_m} + \frac{8\pi x_p^6}{3k^2} F(m) N_{agg} \frac{\int_{D_{min}}^{D_{max}} N_p^2(D_m)\, g(R_g,k,D_f)\, .n(D_m).dD_m}{\int_{D_{min}}^{D_{max}} n(D_m).dD_m} \quad (5)$$

Avec

$$x_p = \frac{\pi D_p}{\lambda}$$

$$k = \frac{2\pi}{\lambda}$$

$$n(D_m) = \frac{1}{\log \sigma_{geo} \sqrt{2\pi}} exp\left(-\frac{(\log D_m - \log D_{m,geo})^2}{2(\log \sigma_{geo})^2}\right)$$

$$N_p(D_m) = k_f \left(\frac{1.3 D_m}{D_p}\right)^{D_f}$$

où :

- $D_{m,geo}$ et $\sigma_{geo}$ correspondent respectivement au diamètre moyen et à l'écart-type de la distribution de taille des particules suivant une loi log-normale entre les valeurs $D_{min}$ et $D_{max}$ ;
- $D_p$, $k_f$, $D_f$ sont des paramètres relatifs à la morphologie fractale des particules;
- $E(m)$ et $F(m)$ sont des paramètres relatifs aux propriétés optiques des particules, $E(m)$ étant une fonction d'absorption et $F(m)$ étant une fonction de diffusion qui dépendent directement de l'indice complexe de réfraction ;
- $N_{agg}$ correspond à la concentration en nombre des particules

De manière générale, cette formule modélise l'interaction entre une onde électromagnétique et des particules sous la forme d'agrégats (ce qui s'applique notamment aux suies). Plus précisément, le premier terme de cette formule représente la partie de l'énergie lumineuse absorbée par les particules, et le deuxième terme de cette formule représente la partie de l'énergie lumineuse diffusée par les particules (redistribution spatiale de l'énergie non absorbée).

Selon un mode de réalisation de cette deuxième variante de l'invention, on détermine au moins la concentration en nombre de particules $N_{agg}$ en utilisant un modèle d'extinction de référence s'écrivant selon une formule du type :

$$K_{ext}^{RDG-FA}(\lambda, N_{agg}) = N_{agg}. C_{ext}^{RDG-FA}(\lambda) \qquad (6)$$

dans laquelle $C_{ext}^{RDG-FA}(\lambda)$ correspond à la section efficace d'extinction variant en fonction de la longueur d'onde selon la théorie dans la théorie de la RDG-FA, et qui peut s'exprimer selon une formule du type :

$$C_{ext}^{RDG-FA}(\lambda) =$$

$$\frac{4\pi x_p^3}{k^2} E(m) \frac{\int_{D_{min}}^{D_{max}} N_p(D_m).n(D_m).dD_m}{\int_{D_{min}}^{D_{max}} n(D_m).dD_m} + \frac{8\pi x_p^6}{3k^2} F(m) \frac{\int_{D_{min}}^{D_{max}} N_p^2(D_m)\, g(R_g,k,D_f)\, .n(D_m).dD_m}{\int_{D_{min}}^{D_{max}} n(D_m).dD_m} \qquad (7)$$

Ainsi, selon cette mise en œuvre de la deuxième variante du procédé selon l'invention, on détermine une concentration en nombre $N_{agg}$ de particules contenues dans un milieu gazeux en recherchant la concentration $N_{agg}$ permettant de minimiser la fonctionnelle $F(\lambda, N_{agg})$ suivante :

$$F\left(\lambda, N_{agg}\right) = K_{ext}^{exp}(\lambda) - N_{agg}.C_{ext}^{RDG-FA}(\lambda) \qquad (8)$$

où $K_{ext}^{exp}(\lambda)$ est la courbe représentative des variations du coefficient d'extinction de la loi de Beer-Lambert en fonction de la longueur d'onde mesurée pour le milieu gazeux dont on cherche à déterminer la concentration en particules. Avantageusement, on utilise la méthode des moindres carrés par exemple en l'exécutant sur lesdits moyens pour le traitement et l'analyse, pour réaliser cette minimisation.

Avantageusement, on peut obtenir des valeurs des paramètres intervenant dans l'équation (7) ci-dessus dans la littérature ou bien de manière expérimentale. Selon une mise en œuvre de l'invention selon laquelle les particules sont des suies, on peut fixer les valeurs de $k_f$ et $D_f$ respectivement à 2.3 et 1.8. Selon une mise en œuvre de l'invention selon laquelle les particules sont des suies issues de la combustion diesel, on peut fixer les valeurs des paramètres $E(m)$ et $F(m)$ respectivement à 0.25 et 0.15.

Selon un mode de réalisation de cette deuxième variante de la mise en œuvre préférée de l'invention s'appliquant lorsque la concentration en nombre de particules $N_{agg}$ est connue, on détermine une taille moyenne des particules $\overline{N_p}$ en utilisant un modèle d'extinction de référence s'exprimant selon une équation du type :

$$K_{ext}^{RDG-FA}\left(\lambda, \overline{N_p}\right) = \frac{4\pi x_p^3}{k^2} E(m) N_{agg} \overline{N_p} \qquad (9)$$

avec :

$$\overline{N_p} = \frac{\int_{D_{min}}^{D_{max}} N_p(D_m).n(D_m).dD_m}{\int_{D_{min}}^{D_{max}} n(D_m).dD_m},$$

dans laquelle $\overline{N_p}$ correspond à la taille moyenne des particules exprimées en nombre de sphérules primaires constituant les agrégats. L'équation (9) ci-dessus peut être obtenue en supposant, en première approximation, que le deuxième terme de l'équation (4) ci-dessus est négligeable.

Ainsi, selon cette mise en œuvre de la deuxième variante du procédé selon l'invention, on détermine la taille moyenne des particules $\overline{N_p}$ contenues dans un milieu gazeux en recherchant la taille moyenne des particules $\overline{N_p}$ permettant de minimiser la fonctionnelle $F(\lambda, \overline{N_p})$ suivante :

$$F\left(\lambda, \overline{N_p}\right) = K_{ext}^{exp}(\lambda) - K_{ext}^{RDG-FA}\left(\lambda, \overline{N_p}\right) \qquad (10)$$

où $K_{ext}^{exp}(\lambda)$ est la courbe représentative des variations du coefficient d'extinction de la loi de Beer-Lambert en fonction de la longueur d'onde mesurée pour le milieu gazeux dont on cherche à déterminer la concentration en particules. Avantageusement, on utilise la méthode des moindres carrés, par exemple en l'exécutant sur lesdits moyens pour le traitement et l'analyse, pour réaliser cette minimisation.

Selon une autre mise en œuvre de la deuxième variante de l'invention, lorsque la concentration en particules est inconnue, on peut déterminer un (ou plusieurs) couple(s) de valeurs de la concentration en nombre $N_{agg}$ de particules et de la taille moyenne en nombre de sphérules $\overline{N_p}$ constituant les agrégats en recherchant le couple $(N_{agg}, \overline{N_p})$ permettant de minimiser la fonctionnelle $F(\lambda, N_{agg}, \overline{N_p})$ suivante :

$$F\left(\lambda, N_{agg}, \overline{N_p}\right) = K_{ext}^{exp}(\lambda) - K_{ext}^{RDG-FA}\left(\lambda, N_{agg}, \overline{N_p}\right) \qquad (11)$$

où $K_{ext}^{exp}(\lambda)$ est la courbe représentative des variations du coefficient d'extinction de la loi de Beer-Lambert en fonction de la longueur d'onde mesurée pour le milieu gazeux dont on cherche à déterminer la concentration en particules et le modèle d'extinction de référence $K_{ext}^{RDG-FA}\left(\lambda, N_{agg}, \overline{N_p}\right)$ s'écrit selon une formule du type :

$$K_{ext}^{RDG-FA}\left(\lambda, N_{agg}, \overline{N_p}\right) = \frac{4\pi x_p^3}{k^2} E(m) N_{agg} \overline{N_p} \qquad (12)$$

Avantageusement, la taille moyenne exprimée en nombre de sphérules primaires peut s'exprimer en diamètre de mobilité électrique via une loi fractale du type :

$$\overline{D_m} = \frac{D_p}{\beta}\left(\frac{\overline{N_p}}{k_f}\right)^{1/D_f}$$

avec : $\beta$ = 1.3.

Avantageusement, afin de réduire le nombre de couples ($N_{agg}, \overline{N_p}$) possibles, on recherche les valeurs des paramètres ($N_{agg}, \overline{N_p}$) dans des gammes prédéfinies. Selon une mise en œuvre de l'invention, dans le cas de particules de suie produites par un moteur thermique Diesel, on recherche de préférence une valeur de $\overline{N_p}$ comprise entre 20 et 200 nm, et une valeur de $N_{agg}$ comprise entre 0 et $10^{20}$ #/$cm^3$, où le signe # vaut pour le nombre de particules.

Avantageusement, on utilise une méthode d'inversion de type gradient conjugué ou encore de Gauss-Newton pour réaliser la minimisation de la fonctionnelle selon l'équation (11).

Dans un mode de réalisation préféré de l'invention, le procédé peut en outre comprendre, à l'étape 3), la mesure in situ de la concentration d'au moins une espèce chimique gazeuse contenue dans le milieu gazeux d'intérêt, à partir au moins du signal numérique de l'intensité lumineuse mesurée aux étapes 1) et 2). Autrement dit, à partir de la même mesure que celle réalisée pour estimer une caractéristique des particules présentes dans un milieu gazeux, on peut en outre déterminer la concentration d'au moins une espèce chimique gazeuse contenue dans ce milieu gazeux.

Comme cela sera décrit ci-dessous, ce mode de réalisation préféré de l'invention ne requiert pas de pré-conditionnement du milieu gazeux (par une surconcentration par exemple) dans le cas d'une espèce chimique présente en faible quantité dans le milieu gazeux à analyser.

La mesure de la concentration d'une espèce chimique selon le mode de réalisation préféré de l'invention peut, en particulier mais non limitativement, être réalisée au moins selon les configurations 1A à 1D décrites ci-dessus.

Dans le procédé selon ce mode de réalisation préféré de l'invention, la concentration de chaque espèce chimique est déterminée à partir de la mesure optique effectuée sur le milieu gazeux et d'une signature optique propre à chaque espèce chimique. Chaque espèce chimique gazeuse dont on souhaite mesurer la concentration absorbe en effet une partie du rayonnement UV et présente un spectre d'absorption qui lui est propre (absorbance en fonction de la longueur d'onde).

Lors de l'étape d'estimation de la concentration d'au moins une espèce chimique du mode de réalisation préféré de l'invention, on effectue au moins les étapes a) et b) décrites ci-dessous :

a) on détermine l'absorbance A du milieu gazeux en fonction de la longueur d'onde W à partir du signal numérique de l'intensité lumineuse généré par le spectromètre et issu de la détection de la partie du rayonnement UV ayant traversé le milieu gazeux, et à partir d'un signal numérique de référence. En particulier, l'absorbance A du milieu gazeux est calculée selon une formule du type:

$$A = -\ln\left(\frac{I_s(\lambda)}{I_0(\lambda)}\right) \qquad (12),$$

où

$\lambda$ est la longueur d'onde, $I_s(\lambda)$ est un signal numérique de l'intensité lumineuse en fonction de la longueur d'onde de la partie du rayonnement UV ayant traversé le milieu gazeux et ayant été mesurée par le spectromètre, et $I_0(\lambda)$ est un signal numérique de référence de l'intensité lumineuse. Le signal numérique de référence de l'intensité lumineuse en fonction de la longueur d'onde peut être obtenu par émission d'un rayonnement UV, par la source lumineuse selon l'invention, à travers un gaz de référence (c'est-à-dire ne contenant pas de particules ni d'espèces chimiques gazeuses autres que celles composant majoritairement l'air, tel que de l'air filtré, du diazote ou de l'hélium), et par détection, par le spectromètre selon l'invention, d'au moins une partie dudit rayonnement UV ayant traversé ledit gaz de référence. Selon ce mode de réalisation préféré de l'invention, les termes $I_s(\lambda)$ et $I_0(\lambda)$ correspondent aux signaux numériques issus des mesures réalisées pour l'application de la formule (1) ci-dessus. Autrement dit, il n'est nul besoin, pour ce mode de réalisation préféré, de réaliser des mesures supplémentaires par rapport à celles réalisées pour déterminer une caractéristique des particules telle que décrite ci-dessus. Avantageusement, le procédé selon l'invention comporte une étape préalable de calibration du système de mesure optique pour déterminer un signal numérique de référence de l'intensité lumineuse.

b) on détermine, par exemple à l'aide des moyens d'analyse et de traitement, la concentration de chaque espèce chimique que l'on souhaite mesurer, à partir de l'absorbance A du milieu gazeux, de caractéristiques prédéterminées d'absorbance et d'une estimation de la pression et de la température de chacune des espèces chimiques. Ces caractéristiques prédéterminées d'absorbance de chacune des espèces chimiques sont de préférence obtenues lors de campagnes de mesure préalables permettant de créer une base de données. Des données issues de la littérature peuvent également venir alimenter une telle base de données. Par caractéristique d'absorbance d'une espèce chimique donnée on entend son coefficient d'extinction molaire. Avantageusement, la pression et/ou la température peuvent être estimées par mesure au cours de la mise en œuvre du procédé selon l'invention, au moyen respectivement d'un capteur de pression et/ou d'un capteur de température.

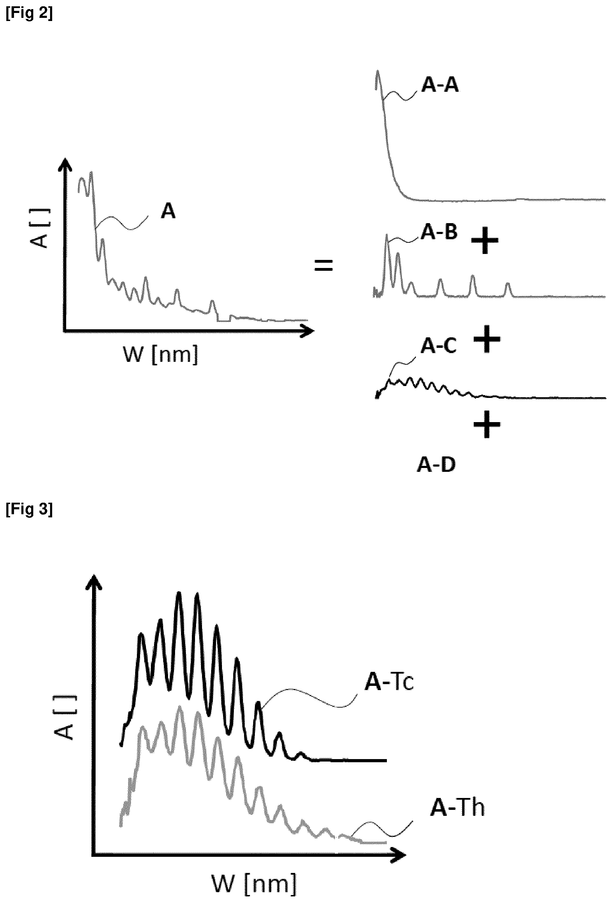

La figure 2 représente schématiquement l'absorbance A du milieu gazeux comportant différentes espèces chimiques gazeuses A, B, C que l'on souhaite mesurer. Le diagramme de gauche représente un exemple d'absorbance A (sans unité) du milieu gazeux, exprimée en fonction de la longueur d'onde W (en nm), calculée à partir du signal numérique de l'intensité lumineuse 50 généré par le spectromètre et du signal numérique de référence.

L'absorbance A d'un milieu gazeux est une fonction de la longueur d'absorbance, c'est-à-dire la longueur du chemin optique traversé par la lumière dans la zone de mesure située dans la ligne d'échappement, de la densité numérique des molécules des espèces chimiques gazeuses (A, B, C) contenues dans le milieu gazeux, et du coefficient d'extinction molaire. Le coefficient d'extinction molaire, aussi appelé absorptivité molaire, est une mesure de probabilité qu'un photon soit en interaction avec un atome ou une molécule.

La densité numérique des molécules d'une espèce chimique est elle-même fonction de la température, de la pression et de la concentration de l'espèce chimique, et le coefficient d'extinction molaire est fonction de la longueur d'onde, de l'espèce chimique, de la température et de la pression.

Ainsi, en disposant des caractéristiques prédéterminées du coefficient d'extinction molaire, de température et de pression de chacune des espèces chimiques, il est possible de déterminer la concentration de chaque espèce chimique X à partir de l'absorbance A du milieu gazeux. Les valeurs d'absorbance de chaque espèce chimique s'additionnent, et leur somme est typiquement égale aux valeurs d'absorbance A du milieu gazeux, au bruit et à l'absorbance des autres espèces chimiques non mesurées près. C'est ce qui est représenté à droite sur la figure 2 par les diagrammes d'absorbance A-A, A-B, et A-C des espèces chimiques A, B et C, qui s'additionnent pour former l'absorbance A des gaz d'échappement, au bruit et aux autres espèces chimiques non détectées près A-D.

Différents types d'algorithmes peuvent être utilisés pour les calculs de concentration, tels que des algorithmes d'ajustement des moindres carrés appliqués aux signaux d'absorbance eux-mêmes, aux dérivés des signaux d'absorbance ou à la partie de fréquence des signaux d'absorbance (typiquement dérivé d'une transformée de Fourier). De même, un certain nombre de méthodes chimiométriques peuvent être utilisées pour ce processus comme, par exemple, l'analyse en composantes principales (PCA, pour "Principal Component Analysis") ou les algorithmes des moindres carrés partiels (PLS).

Ainsi, dans ce mode de réalisation préféré du procédé selon l'invention, la concentration de chaque espèce chimique est déterminée à partir de la mesure optique effectuée sur le milieu gazeux et de la signature optique propre à chaque espèce chimique. Chaque espèce chimique gazeuse dont on souhaite mesurer la concentration absorbe en effet une partie du rayonnement UV et présente un spectre d'absorption qui lui est propre (absorbance en fonction de la longueur d'onde).

Ce mode de réalisation préféré de l'invention est très avantageux car il permet, au moyen d'un seul procédé et d'un seul système de mesure, de déterminer des caractéristiques de divers types de substances polluantes, en l'espèce des particules (solides ou liquides) et des espèces chimiques gazeuses, présentes dans un milieu gazeux. Le contrôle du respect des normes relatives aux substances polluantes en est donc simplifié.

Selon une variante du mode de réalisation préféré de l'invention, on peut effectuer la mesure d'au moins une espèce chimique gazeuse X, et de préférence plusieurs espèces chimiques gazeuses X, comprises dans la liste constituée de manière non limitative par : $NO$, $NO_2$, $N_2O$, $NH_3$, BTEX, $SO_2$, $H_2S$, $O_3$, $O_2$, $H_2O$, les aldéhydes comme l'acétaldéhyde ou le formaldéhyde, des hydrocarbures non aromatiques comme l'acétylène ou le buta-1,3-diène.

De préférence, on effectue la mesure d'au moins une, et plus préférentiellement de plusieurs, espèces chimiques gazeuses comprises dans la liste constituée par : $NO$, $NO_2$, $N_2O$, $NH_3$, BTEX, $SO_2$, $H_2S$, $O_3$, $O_2$, $H_2O$. L'acronyme BTEX se réfère au benzène, au toluène, à l'éthylbenzène et aux xylènes appartenant à la famille des hydrocarbures aromatiques.

Avantageusement, on peut effectuer la mesure dissociée et simultanée de la concentration d'une pluralité de ces espèces chimiques gazeuses. Par mesure dissociée, on entend un accès à la concentration propre de chaque espèce chimique, par opposition à une mesure globale de la concentration de plusieurs espèces chimiques sans distinction. Par exemple, on peut procéder à la mesure simultanée de la concentration d'au moins deux espèces chimiques gazeuses, de préférence au moins la concentration de $NO$ et la concentration de $NO_2$.

Les oxydes d'azote $NO$ et $NO_2$ représentent des polluants atmosphériques réglementés, qu'il est avantageux de mesurer.

Une telle mesure peut ainsi permettre un contrôle des NOx en sortie d'un système de dépollution post combustion, de préférence en sortie d'un système SCR, ou un contrôle des NOx en amont et en aval d'un système de dépollution, de préférence d'un système SCR, pour estimer par exemple la conversion en temps réel des NOx en $N_2$ par ledit système de dépollution, et tout en contrôlant l'apport de $NH_3$.

Le système SCR permet de réduire de manière sélective les NOx par un agent réducteur sur un catalyseur dédié. La réduction est dite sélective car l'agent réducteur réduit les NOx et non l'oxygène présent dans le mélange de gaz. Grâce à un tel système de dépollution, les NOx sont majoritairement convertis en diazote $N_2$. Cet agent réducteur, en particulier pour une utilisation avec un moteur à combustion interne d'un véhicule automobile, est soit de l'ammoniac (ou une matière pouvant se décomposer en de l'ammoniac), soit un hydrocarbure oxygéné ou non, soit un mélange d'hydrocarbures pouvant contenir en partie ou en totalité un ou plusieurs hydrocarbures oxygénés, soit du dihydrogène. Dans le cas d'un traitement des gaz d'échappement avec une SCR par l'ammoniac par exemple, l'agent ammoniacal utilisé est stocké soit sous forme de complexes solides, soit sous forme de précurseur liquide, comme de l'urée en solution aqueuse.

La mesure de NO et $NO_2$ permet ainsi un contrôle des NOx en amont et en aval d'un système SCR utilisant un agent ammoniacal, pour estimer par exemple la conversion en temps réel des NOx en $N_2$ par ledit système de dépollution tout en contrôlant l'apport de $NH_3$.

Grâce à une mesure de NO dissociée de celle du $NO_2$, il est possible de connaître le rapport molaire $NO/NO_2$ composant les NOx.

Il est intéressant de connaître le rapport $NO/NO_2$ car la réaction de réduction des NOx avec l'ammoniac est différente en fonction de ce rapport (plus rapide lorsque NO et $NO_2$ sont en quantités équivalentes). De plus $NO_2$ est utile pour aider à l'oxydation des suies présentes dans un filtre à particules (FAP) par exemple.

Avantageusement, dans le cas où le procédé selon l'invention est appliqué à des gaz d'échappement circulant dans une ligne d'échappement, le système de mesure optique peut comporter deux capteurs optiques respectivement placés en amont et en aval du système de dépollution des NOx, il est alors possible de connaître la conversion en temps réel des NOx en $N_2$. Un système de diagnostic électronique embarqué (OBD pour On-Board Diagnostics selon la terminologie anglo-saxonne) incluant le diagnostic de $NO_2$ est alors possible, un tel diagnostic pouvant être requis à l'avenir par la règlementation sur les émissions polluantes des moteurs à combustion interne de véhicules.

Avantageusement, on peut également effectuer la mesure de la concentration d'au moins le $SO_2$, ou l'$H_2S$, et de préférence d'au moins les deux. La quantification des éléments soufrés permet par exemple de faire le diagnostic d'un possible empoisonnement d'un système de dépollution post combustion pouvant être lié à l'utilisation de carburants à forte teneur en soufre, ou de contrôler les émissions des navires évoluant en zone d'émission contrôlée de soufre (SECA).

Avantageusement, on mesure la concentration d'au moins $NH_3$. Dans ce cas, on peut surveiller l'évolution de la concentration en $NH_3$ en amont et/ou en aval du système SCR, afin notamment de contrôler la concentration de $NH_3$ en amont d'un système SCR, par exemple en réglant l'injection d'un agent ammoniacal dans le système SCR, ou de gérer les problématiques d'émissions non désirées de $NH_3$ lors d'un fonctionnement avec un système SCR. Un OBD incluant le diagnostic de $NH_3$ est alors possible, un tel diagnostic pouvant être requis à l'avenir par la règlementation sur les émissions polluantes des moteurs à combustion interne de véhicules.

Selon une variante principale du mode de réalisation préféré du procédé selon l'invention, on détermine à l'étape 3) la température (T) du milieu gazeux, en plus d'au moins une caractéristique des particules présentes dans le milieu gazeux et de la concentration d'au moins une espèce chimique gazeuse dans le milieu gazeux. Avantageusement, on détermine la température (T) du milieu gazeux par modification du coefficient d'extinction molaire de l'absorbance de l'espèce chimique dont on souhaite mesurer la concentration, ladite absorbance de l'espèce chimique étant extraite de l'absorbance du milieu gazeux. La modification du coefficient d'extinction molaire peut être un décalage de la longueur d'onde, conduisant à une absorption à des longueurs d'ondes différentes, ou une modification de l'amplitude de l'absorbance à une longueur d'onde donnée, ou une combinaison des deux. Lorsque le comportement exact du coefficient d'extinction molaire de l'absorbance en fonction de la température d'une espèce chimique est connu, par le biais de mesures préalables ou de données issues de la littérature, permettant de créer une bibliothèque, cette espèce chimique peut être utilisée comme indicateur de température. Le degré de précision sur la détermination de la température dépend de la sensibilité du coefficient d'extinction molaire de l'espèce chimique dans la gamme de longueur d'onde mesurée. La figure 3 illustre l'influence de la température sur l'absorbance d'une espèce chimique, ici l'ammoniac, exploitée pour déterminer la température selon la présente invention. La courbe A-Tc représente l'absorbance de $NH_3$ pour une température faible, par exemple 20°C, et la courbe A-Th représente l'absorbance de $NH_3$ pour une température élevée, par exemple 450°C. Une modification du coefficient d'extinction molaire par exemple aboutit à un décalage du signal d'absorption. Bien que l'exemple donné porte sur l'ammoniac, toute autre espèce chimique comme le $SO_2$, $H_2S$, $NH_3$, les BTEX, les siloxanes, les halogénés, les aldéhydes comme l'acétaldéhyde ou le formaldéhyde, des hydrocarbures non aromatiques comme l'acétylène ou le buta-1,3-diène, peut être utilisée pour déterminer la température. Le même type d'algorithme que ceux utilisés pour déterminer la concentration des espèces chimiques peut être utilisé pour déterminer la température.

**EP 4 111 165 B1**

Ainsi, le procédé selon cette variante principale du mode de réalisation préféré de l'invention permet d'accéder à la température du milieu gazeux, sans appareil de mesure supplémentaire dans la zone de contrôle. De plus, cette variante principale du mode de réalisation préféré de l'invention permet la mesure instantanée de la température, par un traitement spécifique du signal d'absorption UV, simultanément à la mesure de la concentration d'espèces chimiques gazeuses contenues dans le milieu gazeux et à la mesure d'une caractéristique des particules présentes dans le milieu gazeux.

Selon l'invention, le rayonnement UV émis par la source lumineuse 42 a une longueur d'onde comprise entre au moins 180 et 400 nm pour mesurer une caractéristique de particules, de préférence au moins comprise entre 190 à 250 nm, gamme qui s'avère suffisante notamment dans le cas de suies produites par un moteur thermique de type Diesel.

Avantageusement, lorsque l'on met en œuvre le procédé selon son mode de réalisation préféré de l'invention pour mesurer en outre une concentration en au moins une espèce chimique gazeuse, le rayonnement UV émis par la source lumineuse 42 a une longueur d'onde au moins comprise entre :

- 180 et 230 nm dans le cas du NO, et/ou
- 180 et 220 nm dans le cas du $NH_3$, et/ou
- 250 et 300 nm dans le cas des BTEX, et/ou
- 180 et 230 nm dans le cas du $NO_2$, et/ou
- 180 et 240 nm dans le cas du $SO_2$,
- 160 et 260 nm dans le cas de l'$H_2S$,
- 120 et 340 nm dans le cas de l'$O_3$.

Ces gammes de longueur d'onde font partie de ce qu'on désigne par UV profond.

A titre d'exemple, la source lumineuse peut être une diode LED émettant dans l'UV et en particulier dans l'UV profond tel qu'indiqué ci-dessus, ou peut-être une lampe au xénon, au deutérium, au zinc, au cadmium, ou une autre lampe à gaz comme les lampes excimères KrBr, KrCL, KrF.

Le spectromètre permet d'analyser le signal lumineux dans la gamme de longueur d'onde 180-400 nm, de préférence 180-280 nm, et plus préférentiellement 180-240 nm. Alternativement, un système simplifié permettant d'analyser une gamme de longueur d'ondes réduite peut être utilisé. On conserve le terme de spectromètre dans la présente invention pour désigner un tel système simplifié.

L'ensemble formé par au moins la source lumineuse UV et le spectromètre, aussi appelé système optique ou capteur optique dans la présente invention, est connu en soi. De tels capteurs optiques peuvent être trouvés dans le commerce.

Le système optique peut comporter d'autres éléments, notamment des éléments optiques tels que des lentilles permettant de modifier le faisceau lumineux si nécessaire (par exemple convergence ou divergence), ou encore des éléments de protection visant à protéger la source lumineuse et le spectromètre, en particulier lors d'un fonctionnement à froid du système de mesure optique. En effet, le fonctionnement à froid peut provoquer des dépôts sur les éléments optiques par un phénomène de condensation. De tels éléments de protection sont décrits plus bas, en relation avec la figure 12. La position du capteur installé sur le conduit dans lequel circule le gaz ou le mélange de gaz peut être choisie de manière à limiter l'encrassement de celui-ci.

L'invention s'applique avantageusement mais non limitativement au domaine de la dépollution des gaz d'échappement. Dans ce cadre, le système de mesure optique peut être positionné à différents endroits sur la ligne d'échappement pour effectuer une mesure in situ d"une caractéristique des particules présentes dans les gaz d'échappement, et/ou de la concentration en au moins une espèce chimique gazeuse et de la température, ces mesures étant adaptées à des émissions polluantes en amont et/ou en aval d'un système de dépollution des gaz post combustion.

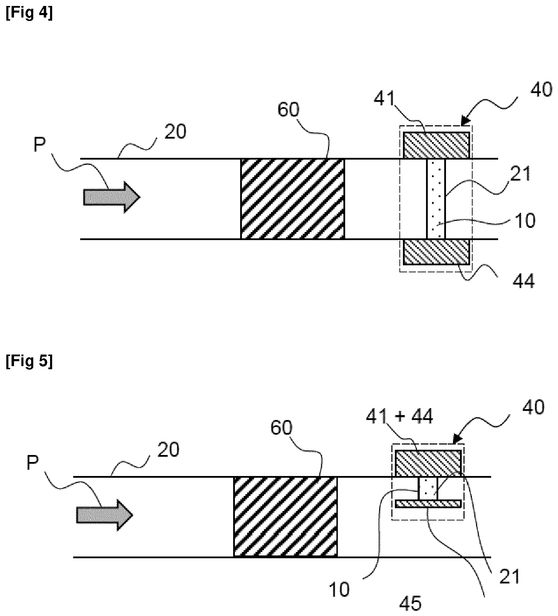

Selon un mode de réalisation, la mesure peut être effectuée en aval d'au moins un système de dépollution des gaz d'échappement tel qu'un catalyseur d'oxydation Diesel (DOC), un système SCR ou un FAP. Un tel mode de réalisation est représenté schématiquement à la figure 4. Les gaz d'échappement 10 circulent dans la ligne d'échappement 20 selon le parcours P, sur laquelle est placé un système de dépollution 60, par exemple un DOC, un système SCR ou un FAP. Le système de dépollution peut également être celui d'un moteur essence, comme un catalyseur trois voies, un autre système de dépollution classiquement utilisé sur les moteurs Diesel, comme un PNA (« partial NOx adsorber » en anglais) ou un piège à NOx (« NOx trap » en anglais). Le système de dépollution comporte une ou plusieurs unités élémentaires de dépollution, chaque unité élémentaire de dépollution pouvant être un pain catalytique et/ou un filtre, catalysé ou non, et modifie la composition ou le contenu des gaz d'échappement. Selon le mode de réalisation représenté à la figure 4, le système de mesure optique 40 est placé en aval du système de dépollution 60. Les positions amont et aval sont définies par rapport au sens de circulation des gaz d'échappement dans la ligne d'échappement. La mesure de caractéristique de particules, avec en outre optionnellement la température des gaz d'échappement et la concentration de certaines espèces chimiques des gaz d'échappement en aval du système de dépollution 60 permet de vérifier le respect des normes d'émissions des substances polluantes, de suivre leur évolution, et si nécessaire d'ajuster le fonctionnement du système

16

de dépollution pour modifier les quantités de ces substances émises.

Selon un autre mode de réalisation, représenté à la figure 5, la mesure in situ est effectuée de manière identique à celle du mode de réalisation représenté à la figure 4, à l'exception que le système de mesure optique comporte un réflecteur 45 pour une mesure réflective. Le système de mesure optique est celui décrit en relation avec la figure 1B. La source 41 et le spectromètre 44 sont placés du même côté de la ligne d'échappement 20, c'est-à-dire à une même extrémité de la zone de mesure 21, opposée à celle où est positionné le réflecteur 45.

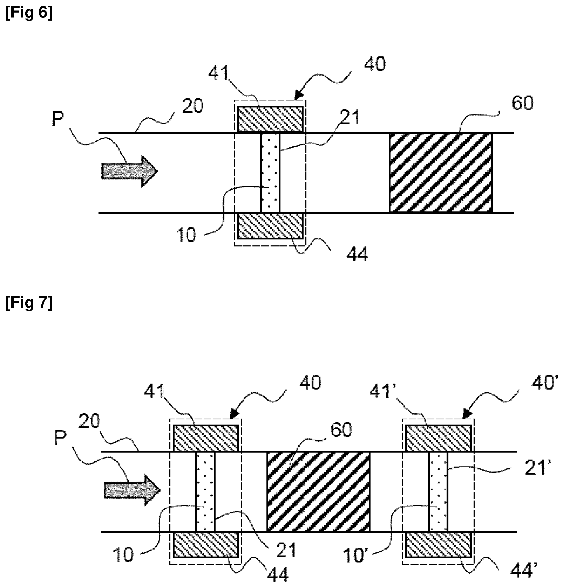

Selon un autre un mode de réalisation, la mesure in situ peut être effectuée en amont d'au moins un système de dépollution des gaz d'échappement tel que les quatre systèmes cités ci-dessus (DOC, PNA, SCR, FAP). Un tel mode de réalisation est représenté schématiquement à la figure 6, identique à la figure 4 à l'exception du système de mesure optique 40 positionné en amont du système de dépollution 60. Un tel mode de réalisation peut être utile pour obtenir des informations sur des caractéristiques des particules présentes dans les gaz d'échappement, et éventuellement en outre sur la température et la concentration d'espèces chimiques des gaz d'échappement avant leur entrée dans le système de dépollution, et d'utiliser ces informations pour influer par exemple sur le fonctionnement du système de dépollution 60.

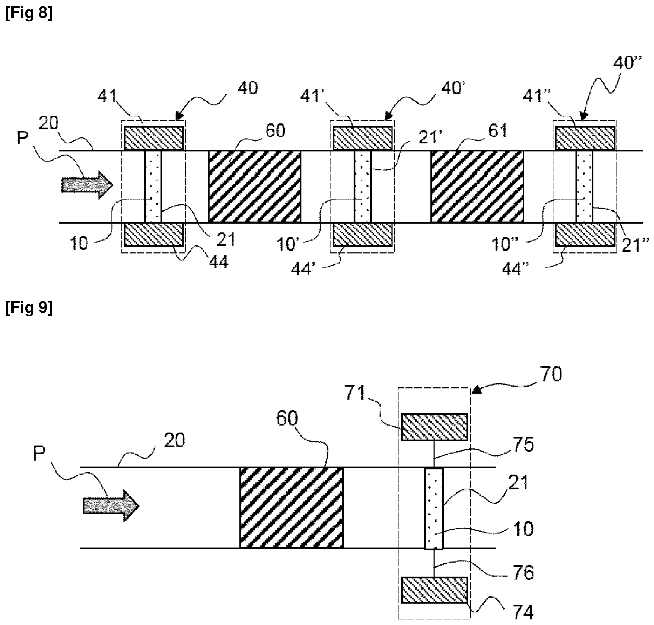

Selon un mode de réalisation, la mesure in situ peut être effectuée en amont et en aval d'au moins un système de dépollution des gaz d'échappement tel que les quatre systèmes cités précédemment (DOC, PNA, SCR, FAP). Un exemple selon ce mode est illustré à la figure 7, dans lequel deux systèmes de mesures optiques 40 et 40' sont placés respectivement en amont et en aval d'un système de dépollution 60. Le deuxième système de mesure optique 40' est identique au premier système de mesure optique 40 disposé en amont, et comprend une source de lumière 40' et un analyseur de lumière 44' permettant respectivement l'émission du rayonnement UV et la détection et l'analyse du rayonnement UV ayant traversé les gaz d'échappement dans la zone de mesure 21' située sur la ligne d'échappement 20, afin de fournir une estimation de caractéristiques des particules présentes dans les gaz d'échappement, et éventuellement en outre de la température et de la concentration d'espèces chimiques des gaz d'échappement. Un autre exemple selon ce mode est illustré à la figure 8, dans lequel la ligne d'échappement comprend deux systèmes de dépollution 60 et 61, et trois systèmes de mesure optique 40, 40', et 40", placés respectivement en amont du premier système de dépollution 60, entre les systèmes de dépollution 60 et 61, et en aval du système de dépollution 61. Un tel mode de réalisation, permet en outre de connaître l'efficacité de chaque système de dépollution sur la ligne d'échappement, et d'éventuellement régler les systèmes de dépollution en fonction des informations sur des caractéristiques des particules présentes dans les gaz d'échappement, et éventuellement en outre sur la température et la concentration d'espèces chimiques des gaz d'échappement, obtenues en amont, en aval et entre les systèmes de dépollution, afin de contrôler les émissions polluantes en sortie de ligne d'échappement.

Selon un mode de réalisation, la source de lumière UV et/ou le spectromètre du système de mesure optique peut être relié à la ligne d'échappement par une fibre optique, permettant plus de souplesse dans l'intégration du système de mesure optique à la ligne d'échappement, notamment dans le cadre d'un système embarqué à bord d'un véhicule. Un exemple d'un tel mode de réalisation est représenté à la figure 9, où des fibres optiques 75 et 76 relient respectivement la source de lumière 71 et le spectromètre 74 du système de mesure optique 70 à la ligne d'échappement 20, au niveau de la zone de mesure 21 où les gaz d'échappement sont traversés par le rayonnement UV conduit par les fibres optiques 75 et 76.

Pour chacun des modes de réalisation représentés aux figures 5 à 9, le système optique peut être celui décrit en relation avec la figure 1B, comprenant un réflecteur 45.

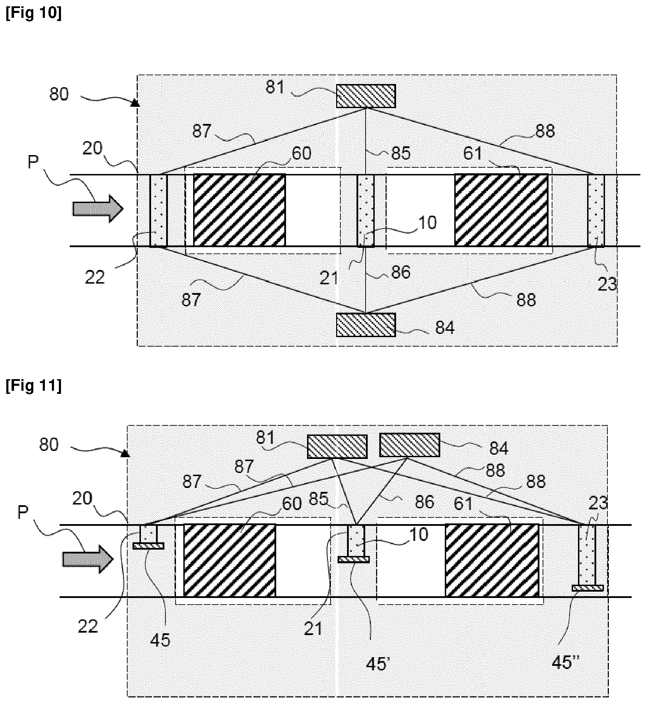

Selon un mode de réalisation, le système de mesure optique peut comprendre plusieurs zones de mesure reliées à une seule source lumineuse et un seul spectromètre, au moyen de fibres optiques. Un tel mode de réalisation permet par exemple de réduire le coût de la mise en œuvre de la mesure optique dans le cas où des mesures en amont et en aval de systèmes de dépollution sont souhaitées. Un exemple d'un tel mode de réalisation est illustré à la figure 10, dans lequel le système de mesure optique 80 comprend trois zones de mesure 21, 22 et 23, et un unique système d'éclairage 81 et de détection/analyse 84 relié aux zones de mesures par des fibres optiques 85, 87 et 88.

Selon un autre un mode de réalisation, la mesure in situ peut être effectuée de manière identique à celle du mode de réalisation représenté à la figure 10, à l'exception que le système de mesure optique comporte trois réflecteurs 45, 45' et 45" tels que décrits en relation avec la figure 1B, respectivement disposés aux extrémités des zones de mesure 21, 22 et 23. Un tel système est illustré en figure 11.

Selon un mode de réalisation, illustré à la figure 12, le système de mesure optique 90 comprend des moyens de protection 95 de la source lumineuse 91 et/ou du spectromètre 94. De tels moyens de protection sont utiles par exemple lors d'un fonctionnement à froid du système de mesure optique, afin d'empêcher un encrassement des éléments optiques, tel que déjà expliqué plus haut. Ces moyens de protection peuvent comprendre un volet pouvant être contrôlé par la mesure de la température des gaz d'échappement, une barrière d'air entre la source lumineuse 91 ou le spectromètre 94 et les gaz d'échappement traversant la zone de mesure 21, un revêtement spécifique, par exemple pour une isolation thermique ou pour empêcher l'adhésion de liquide ou de particules solides, de la ou les surfaces séparant la source lumineuse 91 des gaz d'échappement ou le spectromètre 94 des gaz d'échappement, ou un moyen de chauffage desdites surfaces. Il peut également s'agir d'une géométrie spécifique du capteur optique, non représenté dans la figure 12.

Selon un mode de réalisation, illustré à la figure 13, le système de mesure optique 90 est du type celui représenté à la figure 1B, et le chemin optique du rayonnement UV est sensiblement tangent au parcours P des gaz d'échappement, le système optique étant par exemple positionné au niveau d'un coude de la ligne d'échappement 20.

Selon un autre mode de réalisation, illustré à la figure 14, le système de mesure optique 90 est du type de celui représenté à la figure 1B, et le chemin optique du rayonnement UV est sensiblement parallèle au parcours P des gaz d'échappement. L'ensemble source de lumière 91 et spectromètre 94 sont situés à la sortie de la ligne d'échappement.

La présente invention s'applique avantageusement à la surveillance des émissions polluantes de gaz d'échappement issus d'un moteur à combustion interne dans le domaine des transports, en particulier celui des véhicules roulants, mais également à la surveillance des émissions polluantes dans le cas d'applications fixes comme les fumées industrielles d'installations de combustion ou les groupes électrogènes.

Dans le domaine des transports, en particulier celui des véhicules roulants, la présente invention peut être utilisée pour surveiller les systèmes de dépollution post combustion, et éventuellement contrôler, c'est-à-dire intervenir dans le réglage, de tels système de dépollution.

**Exemples**

Les avantages du procédé et du dispositif selon l'invention sont présentés ci-après dans deux exemples d'application.

**Exemple 1**

Le premier exemple d'application du procédé selon l'invention est mis en œuvre au moyen de la première variante décrite ci-dessus, et vise à déterminer la concentration des particules présentes sous forme de suies dans un milieu gazeux correspondant à des gaz d'échappement issus d'un moteur thermique de type Diesel.

Plus précisément, pour cet exemple d'application, on génère 5 échantillons de gaz comprenant des particules au moyen de 5 réglages différents du dispositif de type CAST DIESEL (brûleur fonctionnant au gasoil) de la société Jing Ltd (Suisse). Chaque réglage du CAST DIESEL permet d'obtenir des suies avec une distribution de taille propre. Les courbes D1 à D5 de la figure 15 représentent les distributions de taille des particules pour chaque échantillon, plus précisément la distribution du nombre de particules par unité de volume NB en fonction de leur diamètre Dm.

Par ailleurs, les suies formées par le CAST sont mesurées par un granulomètre de référence, en l'espèce le dispositif SMPS de la société TSI (France). La concentration en particules est mesurée par un PPS de la société PEGASOR (Finlande). Ces appareils nous permettent d'avoir la concentration et la taille des suies présentes dans chacun des échantillons.

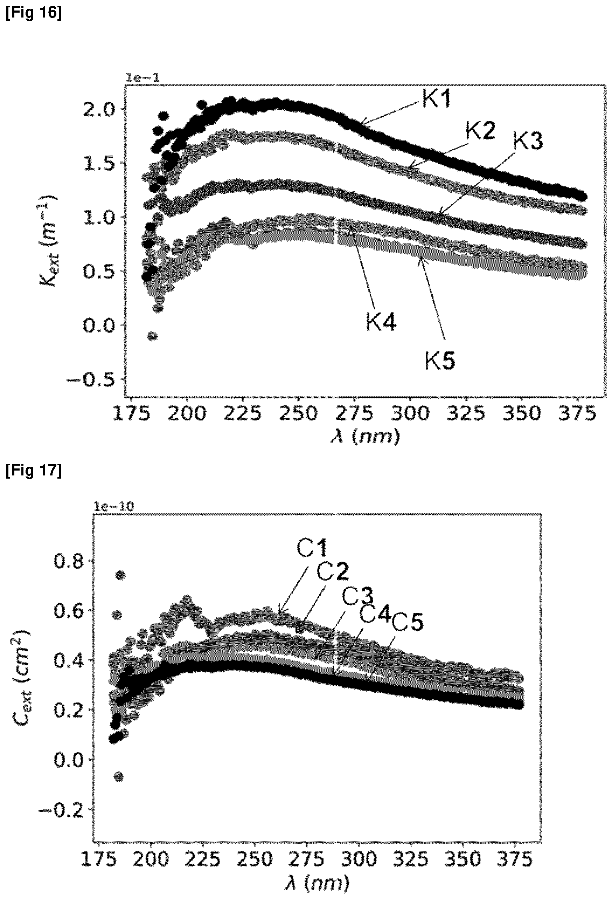

En parallèle de ces mesures, on réalise la mesure par absorption UV tel que décrit aux étapes 1) et 2) du procédé selon l'invention pour chacun des échantillons. Puis on détermine, au moyen de la formule (1) ci-dessus, une courbe représentative des variations du coefficient d'extinction $K_{ext}$ en fonction de la longueur d'onde $\lambda$ pour chacun des 5 échantillons. L'ensemble de ces courbes, notées K1 à K5, sont représentées en figure 16.

Puis à partir des courbes représentatives des variations du coefficient d'extinction en fonction de la longueur d'onde pour chacun des échantillons de gaz et de la concentration en nombre de particules de chacun des échantillons, on détermine des courbes représentatives des variations de la section efficace de diffusion en fonction de la longueur d'onde $\lambda$ pour chacun des échantillons selon la formule (3) ci-dessus. L'ensemble de ces courbes, notées C1 à C5 sont présentées à titre illustratif en figure 17. On peut observer sur cette figure que les courbes C1 à C5 sont très proches les unes des autres, ce qui justifie d'en faire une moyenne dans l'étape suivante.

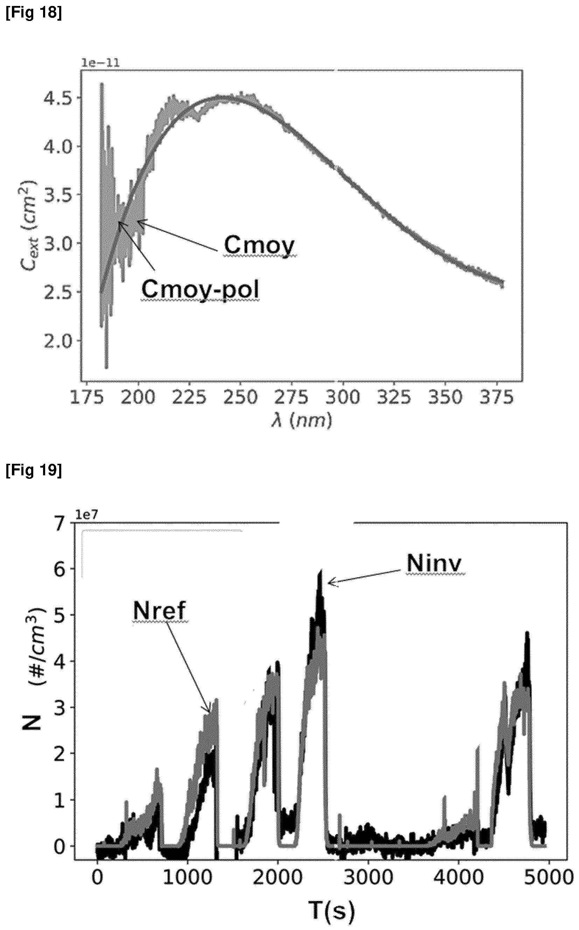

La Figure 18 présente une courbe notée Cmoy qui correspond à la moyenne des courbes C1 à C5. On peut observer que cette courbe comporte des variations très haute fréquence, surtout pour les faibles longueurs d'onde. Afin d'améliorer l'application de la formule (2) décrite ci-dessus, on détermine en outre une approximation lissée Cmoy-pol de la courbe haute fréquence Cmoy, au moyen d'un polynôme de degré 4.

Pour cet exemple d'application, on utilise la courbe polynomiale Cmoy-pol pour la minimisation selon la formule (2) décrite ci-dessus, afin de déterminer la concentration en nombre de particules dans les gaz d'échappement.

La figure 19 présente la concentration en nombre de particules Ninv (courbe en gris) déterminée par le procédé selon cette première variante de l'invention, qui est comparée à une concentration en nombre de particules Nref de référence (courbe en noir), déterminée au moyen du dispositif PPS PEGASOR. On peut observer sur cette figure 19 que le procédé selon l'invention permet de déterminer une concentration en particules très proche de la concentration de référence donnée par le PPS, ce qui démontre que le procédé selon l'invention est pertinent pour la mesure de la concentration de particules.

**EP 4 111 165 B1**

**Exemple 2**

Le deuxième exemple d'application du procédé selon l'invention est mis en œuvre au moyen de la deuxième variante décrite ci-dessus, et vise à déterminer à la fois la taille moyenne et la concentration des particules présentes sous forme de suies dans un milieu gazeux correspondant à des gaz d'échappement issus d'un moteur thermique de type Diesel.

Plus précisément, les particules ont été générées par un générateur de type miniCAST de la société de la société Jing Ltd (Suisse) alimenté au gasoil. Les particules ont une taille en diamètre de mobilité électrique comprise entre 30 et 150 nm (soit un nombre de sphérules $\overline{N_p} < 200$) selon le point de fonctionnement (richesse globale $\phi$).

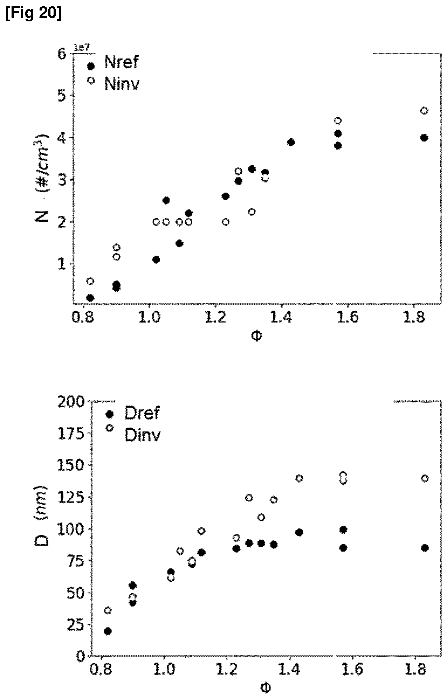

La figure 20 montre l'évolution de la courbe de concentration en nombre (courbe Ninv en haut) et de la courbe de taille moyenne (courbe Dinv en bas) des particules en fonction de la richesse globale $\phi$ déterminées au moyen de la deuxième variante du procédé selon l'invention, en comparaison avec des courbes (respectivement notées Nref et Dref) obtenues au moyen d'appareils de mesures de référence (PPS de la société Pegasor pour la concentration en nombre, SMPS de la société TSI pour la taille en diamètre de mobilité). On peut ainsi conclure par comparaison que le procédé selon l'invention est pertinent pour la mesure à la fois de la concentration et de la taille des particules, même dans le cas de nanoparticules.

**Revendications**

1. Procédé pour la mesure d'au moins une caractéristique de particules présentes dans un milieu gazeux (10), au moyen au moins d'un système de mesure optique (40, 40', 40'', 70, 80, 90), ledit système de mesure optique comprenant au moins une source lumineuse (41, 41', 41'', 71, 81, 91) et un spectromètre (44, 44', 44'', 74, 84, 94), ladite au moins une caractéristique de particules étant choisie parmi une concentration en nombre desdites particules et une taille moyenne desdites particules, ledit procédé comprenant au moins les étapes suivantes :

   a) l'émission par la source lumineuse d'un rayonnement UV (42) à travers ledit milieu gazeux (43) dans une zone de mesure (21, 22, 23) ;
   b) la détection par ledit spectromètre d'au moins une partie dudit rayonnement UV ayant traversé ledit milieu gazeux (43) dans ladite zone de mesure (21, 22, 23) et la génération d'un signal numérique (50) de l'intensité lumineuse en fonction de la longueur d'onde de ladite partie du rayonnement UV ayant traversé ledit milieu gazeux ;
   c) l'estimation d'au moins ladite caractéristique desdites particules présentes dans ledit milieu gazeux de la manière suivante :

   i) à partir au moins dudit signal numérique de l'intensité lumineuse en fonction de la longueur d'onde, on détermine une courbe représentative des variations d'un coefficient d'extinction de la loi de Beer-Lambert en fonction de la longueur d'onde pour ledit milieu gazeux comportant lesdites particules ; et
   ii) on détermine la valeur de ladite caractéristique en minimisant un écart entre ladite courbe représentative des variations d'un coefficient d'extinction de la loi de Beer-Lambert et un modèle de variations de référence du coefficient d'extinction de loi de Beer-Lambert en fonction de la longueur d'onde et d'au moins ladite caractéristique.

2. Procédé selon la revendication 1, dans lequel on détermine ladite courbe représentative des variations d'un coefficient d'extinction de la loi de Beer-Lambert en fonction de la longueur d'onde selon une formule du type :

$$K_{ext}^{exp}(\lambda) = -\frac{1}{L}\ln\left(\frac{I_s(\lambda)}{I_0(\lambda)}\right)$$

où L est la longueur du chemin optique suivi par ledit rayonnement entre ladite source lumineuse et ledit spectromètre, $\lambda$ est ladite longueur d'onde, $I_s(\lambda)$ est ledit signal numérique de ladite intensité lumineuse en fonction de la longueur d'onde de ladite partie dudit rayonnement UV ayant traversé ledit milieu gazeux, et $I_0(\lambda)$ est un signal numérique de référence de l'intensité lumineuse en fonction de la longueur d'onde.

3. Procédé selon l'une des revendications précédentes dans lequel, ladite caractéristique correspond à une concentration en nombre desdites particules, et dans lequel on construit ledit modèle de variations de référence du coefficient d'extinction de loi de Beer-Lambert en fonction de la longueur d'onde et de ladite concentration en nombre de la

19

manière suivante : on détermine une pluralité de courbes représentatives des variations du coefficient d'extinction de loi de Beer-Lambert en fonction de la longueur d'onde pour une pluralité d'échantillons dudit milieu gazeux comprenant des particules ayant des concentrations de particules et des distributions de taille de particules distinctes ;

on détermine une courbe $\overline{C_{ext}^{ref}}(\lambda)$ représentative des variations moyennes d'une section efficace d'extinction en fonction de la longueur d'onde $\lambda$ à partir au moins de ladite pluralité de courbes et desdites concentrations en particules desdits échantillons ; on construit ledit modèle d'extinction de référence $K_{ext}^{ref}(\lambda, N)$ en fonction de ladite longueur d'onde $\lambda$ et de la dite concentration en particules N selon une formule du type :

$$K_{ext}^{ref}(\lambda, N) = N.\overline{C_{ext}^{ref}}(\lambda).$$

**4.** Procédé selon l'une des revendications précédentes, dans lequel on construit un modèle de variations de référence du coefficient d'extinction de loi de Beer-Lambert en fonction de la longueur d'onde et de ladite concentration en nombre et/ou de taille moyenne desdites particules selon la théorie de Rayleigh-Debye-Gans pour les agrégats fractals.

**5.** Procédé selon la revendication 4, dans lequel ladite caractéristique est ladite concentration en nombre desdites particules, et dans lequel on construit ledit modèle de variations de référence du coefficient d'extinction $K_{ext}^{RDG-F}(\lambda, N_{agg})$ en fonction de la longueur d'onde $\lambda$ et de ladite concentration en nombre $N_{agg}$ à partir d'une formule du type : $K_{ext}^{RDG-FA}(\lambda, N_{agg}) = N_{agg}.C_{ext}^{RDG-FA}(\lambda)$, où $C_{ext}^{RDG-F}(\lambda)$ est une section efficace d'extinction de la théorie de Rayleigh-Debye-Gans pour les agrégats fractals.

**6.** Procédé selon la revendication 4, dans lequel ladite caractéristique est ladite taille moyenne desdites particules, et dans lequel on construit ledit modèle de variations de référence du coefficient d'extinction $K_{ext}^{RDG-FA}(\lambda, \overline{N_p})$ en fonction de la longueur d'onde $\lambda$ et de ladite taille moyenne $\overline{N_p}$ des particules exprimée en nombre de sphérules primaires constituant les agrégats à partir d'une formule du type :

$$K_{ext}^{RDG-FA}(\lambda, \overline{N_p}) = \frac{4\pi x_p^3}{k^2}E(m)N_{agg}\overline{N_p},$$

où $N_{agg}$ est la concentration en nombre, $x_p = \frac{\pi D_p}{\lambda}$, $k = \frac{2\pi}{\lambda}$, $D_p$ est un paramètre relatif à la morphologie fractale desdites particules, $E(m)$ est un paramètre relatif aux propriétés optiques d'absorption desdites particules.

**7.** Procédé selon la revendication 4, dans lequel on construit ledit modèle de variations de référence du coefficient d'extinction $K_{ext}^{RDG-FA}(\lambda, N_{agg}, \overline{N_p})$ en fonction de la longueur d'onde $\lambda$, de ladite concentration en nombre $N_{agg}$ et de ladite taille moyenne $\overline{N_p}$ des particules exprimée en nombre de sphérules primaires constituant les agrégats à partir d'une formule du type :

$$K_{ext}^{RDG-FA}(\lambda, N_{agg}, \overline{N_p}) = \frac{4\pi x_p^3}{k^2}E(m)N_{agg}\overline{N_p},$$

où $x_p = \frac{\pi D_p}{\lambda}$, $k = \frac{2\pi}{\lambda}$, $D_p$ est un paramètre relatif à la morphologie fractale desdites particules, $E(m)$ est un paramètre relatif aux propriétés optiques d'absorption desdites particules.

**8.** Procédé selon l'une des revendications précédentes, dans lequel, à l'étape c), on détermine en outre une concentration d'au moins une espèce chimique gazeuse contenue dans ledit milieu gazeux (10) de la manière suivante :

    - on détermine une absorbance (A) dudit milieu gazeux en fonction de la longueur d'onde à partir au moins dudit signal numérique de l'intensité lumineuse (50) en fonction de la longueur d'onde de ladite partie du rayonnement UV ayant traversé ledit milieu gazeux (43) et d'un signal numérique de référence de l'intensité lumineuse en fonction de la longueur d'onde ;
- on détermine ladite concentration de ladite au moins une espèce chimique à partir de ladite absorbance (A) dudit milieu gazeux et de caractéristiques prédéterminées d'absorbance, de température et de pression de ladite espèce chimique.

9. Procédé selon la revendication 8, dans lequel on mesure ladite concentration d'au moins une, et de préférence plusieurs, espèces chimiques gazeuses contenues dans ledit milieu gazeux, et comprises dans la liste constituée par : NO, $NO_2$, $N_2O$, BTEX, $SO_2$, $H_2S$, $O_3$, $O_2$, $H_2O$, les aldéhydes comme l'acétaldéhyde ou le formaldéhyde, des hydrocarbures non aromatiques comme l'acétylène ou le buta-1,3-diène.

10. Procédé selon la revendication 8, dans lequel, à l'étape c), on détermine en outre la température (T) dudit milieu gazeux à partir dudit signal numérique (50) par modification du coefficient d'extinction molaire de l'absorbance de ladite espèce chimique extraite de l'absorbance (A) dudit milieu gazeux, ladite modification étant un décalage de la longueur d'onde ou une modification de l'amplitude ou une combinaison des deux.

11. Procédé selon l'une des revendications précédentes, dans lequel le rayonnement UV (42) émis a une longueur d'onde comprise entre 180 et 400 nm, de préférence comprise entre 190 et 250 nm.

12. Procédé selon l'une des revendications précédentes, dans lequel ledit milieu gazeux correspond à des gaz d'échappement et ladite zone de mesure correspond à un conduit dans lequel circule lesdits gaz d'échappement.

13. Procédé selon l'une des revendications précédentes, comportant une étape préalable de calibration dudit système de mesure optique pour fournir un signal numérique de référence de l'intensité lumineuse en fonction de la longueur d'onde, de préférence par émission dudit rayonnement UV à travers un gaz de référence, et par détection d'au moins une partie dudit rayonnement UV ayant traversé ledit gaz de référence pour fournir un signal numérique de référence de l'intensité lumineuse en fonction de la longueur d'onde de ladite partie du rayonnement UV ayant traversé ledit gaz de référence.

14. Système pour la mesure d'au moins une caractéristique de particules présentes dans un milieu gazeux, ledit système comportant :

I) une source lumineuse (41, 41', 41", 71, 81, 91) susceptible d'émettre un rayonnement UV (42) à travers ledit gaz au sein d'une zone de mesure (21, 22, 23) ;
II) un spectromètre (44, 44', 44", 74, 84, 94) susceptible de détecter au moins une partie dudit rayonnement UV ayant traversé ledit gaz (43) dans ladite zone de mesure (21, 22, 23) et la génération d'un signal numérique de l'intensité lumineuse (50) en fonction de la longueur d'onde de ladite partie du rayonnement UV ayant traversé ledit gaz (43) ; et
III) des moyens pour le traitement et l'analyse dudit signal pour déterminer au moins ladite caractéristique desdites particules présentes dans ledit gaz à partir au moins dudit signal numérique (50), et le système étant **caractérisé en ce que** ladite source lumineuse (41, 41', 41", 71, 81, 91), ledit spectromètre (44, 44', 44", 74, 84, 94) et lesdits moyens pour le traitement et l'analyse dudit signal sont adaptés pour mettre en oeuvre le procédé pour la mesure optique d'au moins une caractéristique de particules contenues dans un milieu gazeux selon l'une des revendications précédentes.

**Patentansprüche**

1. Verfahren zum Messen mindestens einer Eigenschaft von Partikeln, die in einem gasförmigen Medium (10) vorliegen, mittels mindestens eines optischen Messsystems (40, 40', 40", 70, 80, 90), wobei das optische Messsystem zumindest eine Lichtquelle (41, 41', 41", 71, 81, 91) und ein Spektrometer (44, 44', 44", 74, 84, 94) umfasst, wobei die mindestens eine Eigenschaft von Partikeln aus einer zahlenbezogenen Konzentration der Partikel und einer mittleren Größe der Partikel ausgewählt ist, wobei das Verfahren zumindest die folgenden Schritte umfasst:

a) Aussenden, mittels der Lichtquelle, einer UV-Strahlung (42) durch das gasförmige Medium (43) in einem Messbereich (21, 22, 23);
b) Detektieren, mittels des Spektrometers, zumindest eines Teils der UV-Strahlung, welcher das gasförmige Medium (43) in dem Messbereich (21, 22, 23) durchquert hat, und Erzeugen eines digitalen Signals (50) der Lichtintensität in Abhängigkeit von der Wellenlänge des Teils der UV-Strahlung, welcher das gasförmige Medium durchquert hat;

c) Schätzen zumindest der Eigenschaft der Partikel, welche in dem gasförmigen Medium vorliegen, auf die folgende Weise:

i) ausgehend zumindest von dem digitalen Signal der Lichtintensität in Abhängigkeit von der Wellenlänge, wird eine Kurve ermittelt, welche die Schwankungen eines Extinktionskoeffizienten des Lambert-Beerschen Gesetzes in Abhängigkeit von der Wellenlänge für das gasförmige Medium wiedergibt, welches die Partikel aufweist; und

ii) der Wert der Eigenschaft wird bestimmt, indem eine Abweichung zwischen der Kurve, welche die Schwankungen eines Extinktionskoeffizienten des Lambert-Beerschen Gesetzes wiedergibt, und einem Bezugsmodell für Schwankungen des Extinktionskoeffizienten des Lambert-Beerschen Gesetzes in Abhängigkeit von der Wellenlänge und zumindest von der Eigenschaft so gering wie möglich gehalten wird.

2. Verfahren nach Anspruch 1, wobei die Kurve, welche die Schwankungen eines Extinktionskoeffizienten des Lambert-Beerschen Gesetzes in Abhängigkeit von der Wellenlänge wiedergibt, gemäß einer Formel folgender Art ermittelt wird:

$$K_{ext}^{exp}(\lambda) = -\frac{1}{L}\ln\left(\frac{I_s(\lambda)}{I_0(\lambda)}\right)$$

wobei L die Länge des optischen Weges ist, welchen die Strahlung zwischen der Lichtquelle und dem Spektrometer durchläuft, $\lambda$ die Wellenlänge ist, $I_s(\lambda)$ das digitale Signal der Lichtintensität in Abhängigkeit von der Wellenlänge des Teils der UV-Strahlung ist, welcher das gasförmige Medium durchquert hat, und $I_0(\lambda)$ ein digitales Bezugssignal der Lichtintensiität in Abhängigkeit von der Wellenlänge ist.

3. Verfahren nach einem der vorhergehenden Ansprüche, wobei die Eigenschaft einer zahlenbezogenen Konzentration der Partikel entspricht, und wobei das Bezugsmodell für Schwankungen des Extinktionskoeffizienten des Lambert-Beerschen Gesetzes in Abhängigkeit von der Wellenlänge und von der zahlenbezogenen Konzentration folgendermaßen erstellt wird: es wird eine Mehrzahl an Kurven, welche die Schwankungen des Extinktionskoeffizienten des Lambert-Beerschen Gesetzes in Abhängigkeit von der Wellenlänge wiedergeben, für eine Mehrzahl an partikelhaltigen Proben des gasförmigen Milieus ermittelt, welche unterschiedliche Partikelkonzentrationen oder Partikelgrößenverteilungen aufweisen; es wird ausgehend zumindest von der Mehrzahl an Kurven und von den Partikelkonzentrationen der Proben eine Kurve $\overline{C_{ext}^{ref}}(\lambda)$ ermittelt, welche mittlere Schwankungen eines wirkungsvollen Extinktionsabschnitts in Abhängigkeit von der Wellenlänge $\lambda$ wiedergibt; es wird das Bezugsmodell für die Extinktion $K_{ext}^{ref}(\lambda, N)$ in Abhängigkeit von der Wellenlänge $\lambda$ und von der Partikelkonzentration N gemäß einer Formel folgender Art erstellt: $K_{ext}^{ref}(\lambda, N) = N.\overline{C_{ext}^{ref}}(\lambda)$ .

4. Verfahren nach einem der vorhergehenden Ansprüche, wobei ein Bezugsmodell für Schwankungen des Extinktionskoeffizienten des Lambert-Beerschen Gesetzes in Abhängigkeit von der Wellenlänge und von der zahlenbezogenen Konzentration und/oder von der mittleren Größe der Partikel gemäß der Theorie von Rayleigh-Debye-Gans für fraktale Aggregate erstellt wird.

5. Verfahren nach Anspruch 4, wobei es sich bei der Eigenschaft um die zahlenbezogene Konzentration der Partikel handelt, und wobei das Bezugsmodell für Schwankungen des Extinktionskoeffizienten $K_{ext}^{RDG-F}(\lambda, N_{agg})$ in Abhängigkeit von der Wellenlänge $\lambda$ und von der zahlenbezogenen Konzentration $N_{agg}$ ausgehend von einer Formel folgender Art erstellt wird: $K_{ext}^{RDG-FA}(\lambda, N_{agg}) = N_{agg}.C_{ext}^{RDG-FA}(\lambda)$ , wobei $C_{ext}^{RDG-F}(\lambda)$ ein wirkungsvoller Extinktionsabschnitt der Theorie von Rayleigh-Debye-Gans für fraktale Aggregate ist.

6. Verfahren nach Anspruch 4, wobei es sich bei der Eigenschaft um die mittlere Größe der Partikel handelt, und wobei das Bezugsmodell für Schwankungen des Extinktionskoeffizienten $K_{ext}^{RDG-FA}\left(\lambda, \overline{N_p}\right)$ in Abhängigkeit von der Wellenlänge λ und von der mittleren Größe $\overline{N_p}$ der Partikel, ausgedrückt als Anzahl an primären Kügelchen, aus welchen die Aggregate bestehen, ausgehend von einer Formel folgender Art erstellt wird:

$$K_{ext}^{RDG-FA}\left(\lambda, \overline{N_p}\right) = \frac{4\pi x_p^3}{k^2} E(m) N_{agg} \overline{N_p},$$

wobei $N_{agg}$ die zahlenbezogene Konzentration ist, $x_p = \frac{\pi D_p}{\lambda}, k = \frac{2\pi}{\lambda}, D_p$ ein Parameter ist, der sich auf die fraktale Morphologie der Partikel bezieht, $E(m)$ ein Parameter ist, der sich auf die absorptionsbezogenen optischen Eigenschaften der Partikel bezieht.

7. Verfahren nach Anspruch 4, wobei das Bezugsmodell für Schwankungen des Extinktionskoeffizienten $K_{ext}^{RDG-FA}\left(\lambda, N_{agg}, \overline{N_p}\right)$ in Abhängigkeit von der Wellenlänge λ, von der zahlenbezogenen Konzentration $N_{agg}$ und von der mittleren Größe $\overline{N_p}$ der Partikel, ausgedrückt als Anzahl an primären Kügelchen, aus welchen die Aggregate bestehen, ausgehend von einer Formel folgender Art erstellt wird:

$$K_{ext}^{RDG-FA}\left(\lambda, N_{agg}, \overline{N_p}\right) = \frac{4\pi x_p^3}{k^2} E(m) N_{agg} \overline{N_p},$$

wobei $x_p = \frac{\pi D_p}{\lambda}, k = \frac{2\pi}{\lambda}, D_p$ ein Parameter ist, der sich auf die fraktale Morphologie der Partikel bezieht, $E(m)$ ein Parameter ist, der sich auf die absorptionsbezogenen optischen Eigenschaften der Partikel bezieht.

8. Verfahren nach einem der vorhergehenden Ansprüche, wobei im Schritt c) darüber hinaus eine Konzentration an mindestens einer gasförmigen chemischen Spezies, welche in dem gasförmigen Medium (10) enthalten ist, folgendermaßen bestimmt wird:

- es wird ein Absorptionsmaß (A) des gasförmigen Mediums in Abhängigkeit von der Wellenlänge ausgehend zumindest von dem digitalen Signal der Lichtintensität (50), welches von der Wellenlänge des Teils (43) der UV-Strahlung abhängt, welcher das gasförmige Medium durchquert hat, und von einem digitalen Bezugssignal für die Lichtintensität bestimmt, welches von der Wellenlänge abhängt;
- es wird die Konzentration der mindestens einen chemischen Spezies ausgehend von dem Absorptionsmaß (A) des gasförmigen Mediums und von vorbestimmten Absorptionsmaß-, Temperatur- und Druckeigenschaften der chemischen Spezies bestimmt.

9. Verfahren nach Anspruch 8, wobei die Konzentration mindestens einer, und vorzugsweise von mehreren gasförmigen chemischen Spezies gemessen wird, die in dem gasförmigen Medium enthalten sind, wobei sie der Liste angehören, welche aus den folgenden besteht: NO, $NO_2$, $N_2O$, BTEX, $SO_2$, $H_2S$, $O_3$, $O_2$, $H_2O$, den Aldehyden wie Acetaldehyd oder Formaldéhyd, den nicht-aromatischen Kohlenwasserstoffen wie Acetylen oder Buta-1,3-dien.

10. Verfahren nach Anspruch 8, wobei im Schritt c) darüber hinaus die Temperatur (T) des gasförmigen Mediums ausgehend von dem digitalen Signal (50) bestimmt wird, indem der molare Extinktionskoeffizient des Absorptionsmaßes der chemischen Spezies, welches aus dem Absorptionsmaß (A) des gasförmigen Mediums extrahiert wurde, einer Modifikation unterzogen wird, wobei es sich bei der Modifikation um eine Verschiebung der Wellenlänge oder eine Modifikation der Amplitude oder um beides handelt.

11. Verfahren nach einem der vorhergehenden Ansprüche, wobei die ausgesendete UV-Strahlung (42) eine Wellenlänge im Bereich von 180 bis 400 nm, vorzugsweise im Bereich von 190 bis 250 nm hat.

12. Verfahren nach einem der vorhergehenden Ansprüche, wobei das gasförmige Medium Abgasen entspricht und der Messbereich einer Leitung entspricht, durch welche die Abgase strömen.

13. Verfahren nach einem der vorhergehenden Ansprüche, wobei es einen vorgeschalteten Schritt des Kalibrierens des optischen Messsystems aufweist, um ein digitales Bezugssignal der Lichtintensität in Abhängigkeit von der Wellenlänge bereitzustellen, vorzugsweise indem die UV-Strahlung durch ein Bezugsgas ausgesendet wird und indem zumindest ein Teil der UV-Strahlung, welcher das Bezugsgas durchquert hat, detektiert wird, um ein digitales Bezugssignal der Lichtintensität in Abhängigkeit von der Wellenlänge des Teils der UV-Strahlung bereitzustellen, welcher das Bezugsgas durchquert hat.

14. System zur Messung mindestens einer Eigenschaft von Partikeln, die in einem gasförmigen Medium vorliegen, wobei das System Folgendes aufweist:

> I) eine Lichtquelle (41, 41', 41", 71, 81, 91), die dazu befähigt ist, eine UV-Strahlung (42) innerhalb eines Messbereichs (21, 22, 23) durch das Gas auszusenden;
> II) ein Spektrometer (44, 44', 44", 74, 84, 94), das dazu befähigt ist, mindestens einen Teil der UV-Strahlung, welcher das gasförmige Medium (43) in dem Messbereich (21, 22, 23) durchquert hat, zu detektieren, und das Erzeugen eines digitalen Signals (50) der Lichtintensität in Abhängigkeit von der Wellenlänge des Teils der UV-Strahlung, welcher das Gas (43) durchquert hat; und
> III) Mittel zur Verarbeitung und Auswertung des Signals, um ausgehend zumindest von dem digitalen Signal (50) zumindest die Eigenschaft der Partikel zu bestimmen, welche in dem Gas vorliegen,

wobei das System weiterhin **dadurch gekennzeichnet ist, dass** die Lichtquelle (41, 41', 41", 71, 81, 91), das Spektrometer (44, 44', 44", 74, 84, 94) und die Mittel zur Verarbeitung und Auswertung des Signals dafür geeignet sind, das Verfahren zur optischen Messung zumindest einer Eigenschaft von Partikeln, welche in einem gasförmigen Medium enthalten sind, gemäß einem vorhergehenden Ansprüche durchzuführen.

## Claims

1. Method for measuring at least one characteristic of particles present in a gaseous medium (10) by way of at least one optical measuring system (40, 40', 40", 70, 80, 90), said optical measuring system comprising at least one light source (41, 41', 41", 71, 81, 91) and a spectrometer (44, 44', 44", 74, 84, 94), said at least one particle characteristic being selected from a numerical concentration of said particles and an average size of said particles, said method comprising at least the following steps:

> a) the light source emitting UV radiation (42) through said gaseous medium (43) in a measuring zone (21, 22, 23);
> b) said spectrometer detecting at least a portion of said UV radiation that has passed through said gaseous medium (43) in said measuring zone (21, 22, 23), and generating a digital signal (50) signalling light intensity as a function of the wavelength of said portion of the UV radiation that has passed through said gaseous medium;
> c) estimating at least said characteristic of said particles present in said gaseous medium as follows:

>> i) based at least on said digital signal signalling light intensity as a function of wavelength, determining a curve representative of variations of an extinction coefficient of the Beer-Lambert law as a function of wavelength for said gaseous medium comprising said particles; and
>> ii) determining the value of said characteristic by minimizing a deviation between said curve representative of variations of an extinction coefficient of the Beer-Lambert law and a model of reference variations of the extinction coefficient of the Beer-Lambert law as a function of wavelength and at least said characteristic.

2. Method according to Claim 1, wherein said curve representative of variations of an extinction coefficient of the Beer-Lambert law as a function of wavelength is determined using a formula of the type:

$$K_{ext}^{exp}(\lambda) = -\frac{1}{L}\ln\left(\frac{I_s(\lambda)}{I_0(\lambda)}\right)$$

where L is the length of the optical path taken by said radiation between said light source and said spectrometer, $\lambda$ is said wavelength, $I_s(\lambda)$ is said digital signal signalling said light intensity as a function of the wavelength of said portion of said UV radiation that has passed through said gaseous medium, and $I_0(\lambda)$ is a reference digital signal signalling light intensity as a function of wavelength.

3. Method according to either of the preceding claims, wherein said characteristic corresponds to a numerical concentration of said particles, and wherein said model of reference variations of the extinction coefficient of the Beer-Lambert law as a function of wavelength and said numerical concentration is constructed as follows: a plurality of curves representative of variations of the extinction coefficient of the Beer-Lambert law as a function of wavelength are determined for a plurality of samples of said gaseous medium comprising particles having distinct particle concentrations and particle size distributions; a curve $\overline{C_{ext}^{ref}}(\lambda)$ representative of average variations of an extinction cross section as a function of wavelength $\lambda$ is determined based at least on said plurality of curves and said particle concentrations of said samples; said reference extinction model $K_{ext}^{ref}(\lambda, N)$ as a function of said wavelength $\lambda$ and said particle concentration N is constructed using a formula of the type: $K_{ext}^{ref}(\lambda, N) = N. \overline{C_{ext}^{ref}}(\lambda)$.

4. Method according to one of the preceding claims, wherein a model of reference variations of the extinction coefficient of the Beer-Lambert law as a function of wavelength and said numerical concentration and/or average size of said particles is constructed using the Rayleigh-Debye-Gans fractal aggregate theory.

5. Method according to Claim 4, wherein said characteristic is said numerical concentration of said particles, and wherein said model of reference variations of the extinction coefficient $K_{ext}^{RDG-F}(\lambda, N_{agg})$ as a function of wavelength $\lambda$ and said numerical concentration $N_{agg}$ is constructed based on a formula of the type:

$$K_{ext}^{RDG-FA}(\lambda, N_{agg}) = N_{agg}. C_{ext}^{RDG-FA}(\lambda)$$, where $C_{ext}^{RDG-F}(\lambda)$ is an extinction cross section of the Rayleigh-Debye-Gans fractal aggregate theory.

6. Method according to Claim 4, wherein said characteristic is said average size of said particles, and wherein said model of reference variations of the extinction coefficient $K_{ext}^{RDG-FA}(\lambda, \overline{N_p})$ as a function of wavelength $\lambda$ and said average size $\overline{N_p}$ of the particles expressed as a number of primary spherules making up the aggregates is constructed based on a formula of the type: $K_{ext}^{RDG-FA}(\lambda, \overline{N_p}) = \frac{4\pi x_p^3}{k^2} E(m) N_{agg} \overline{N_p}$ , where $N_{agg}$ is the numerical concentration, $x_p = \frac{\pi D_p}{\lambda}, k = \frac{2\pi}{\lambda}, D_p$ is a parameter relating to the fractal morphology of said particles, and E(m) is a parameter relating to the optical absorption properties of said particles.

7. Method according to Claim 4, wherein said model of reference variations of the extinction coefficient $K_{ext}^{RDG-FA}(\lambda, N_{agg}, \overline{N_p})$ as a function of wavelength $\lambda$, said numerical concentration $N_{agg}$ and said average size $\overline{N_p}$ of the particles expressed as a number of primary spherules making up the aggregates is constructed based on a formula of the type:

$$K_{ext}^{RDG-FA}(\lambda, N_{agg}, \overline{N_p}) = \frac{4\pi x_p^3}{k^2} E(m) N_{agg} \overline{N_p},$$

where $x_p = \frac{\pi D_p}{\lambda}, k = \frac{2\pi}{\lambda}, D_p$ is a parameter relating to the fractal morphology of said particles, and E(m) is a parameter relating to the optical absorption properties of said particles.

8. Method according to one of the preceding claims, wherein, in step c), a concentration of at least one gaseous chemical species contained in said gaseous medium (10) is furthermore determined as follows:

   - determining an absorbance (A) of said gaseous medium as a function of wavelength based at least on said digital signal signalling light intensity (50) as a function of the wavelength of said portion of the UV radiation that has passed through said gaseous medium (43) and a reference digital signal signalling light intensity as a function of wavelength;
   - determining said concentration of said at least one chemical species based on said absorbance (A) of said gaseous medium and predetermined characteristics pertaining to the absorbance, temperature and pressure of said chemical species.

9. Method according to Claim 8, wherein said concentration of at least one, and preferably several, gaseous chemical species contained in said gaseous medium and included in the following list: NO, $NO_2$, $N_2O$, BTEX, $SO_2$, $H_2S$, $O_3$, $O_2$, $H_2O$, aldehydes such as acetaldehyde or formaldehyde, and non-aromatic hydrocarbons such as acetylene or buta-1,3-diene, is measured.

10. Method according to Claim 8, wherein, in step c), the temperature (T) of said gaseous medium is furthermore determined based on said digital signal (50) by changing the molar extinction coefficient of the absorbance of said chemical species extracted from the absorbance (A) of said gaseous medium, said change being a wavelength shift or an amplitude change or a combination of both.

11. Method according to one of the preceding claims, wherein the UV radiation (42) that is emitted has a wavelength between 180 and 400 nm, preferably between 190 and 250 nm.

12. Method according to one of the preceding claims, wherein said gaseous medium corresponds to exhaust gases and said measuring zone corresponds to a duct in which said exhaust gases circulate.

13. Method according to one of the preceding claims, comprising a preliminary step of calibrating said optical measuring system in order to supply a reference digital signal signalling light intensity as a function of wavelength, preferably by emitting said UV radiation through a reference gas, and by detecting at least a portion of said UV radiation that has passed through said reference gas in order to supply a reference digital signal signalling light intensity as a function of the wavelength of said portion of the UV radiation that has passed through said reference gas.

14. System for measuring at least one characteristic of particles present in a gaseous medium, said system comprising:

I) a light source (41, 41', 41", 71, 81, 91) capable of emitting UV radiation (42) through said gas within a measuring zone (21, 22, 23);
II) a spectrometer (44, 44', 44", 74, 84, 94) capable of detecting at least a portion of said UV radiation that has passed through said gas (43) in said measuring zone (21, 22, 23), and generating a digital signal signalling light intensity (50) as a function of the wavelength of said portion of the UV radiation that has passed through said gas (43); and
III) means for processing and analysing said signal in order to determine at least said characteristic of said particles present in said gas based at least on said digital signal (50),

and the system being **characterized in that** said light source (41, 41', 41", 71, 81, 91), said spectrometer (44, 44', 44", 74, 84, 94) and said means for processing and analysing said signal are designed to implement the method for optically measuring at least one characteristic of particles contained in a gaseous medium according to one of the preceding claims.

EP 4 111 165 B1

[Fig 1A]

[Fig 1B]

[Fig 1C]

[Fig 1D]

[Fig 2]

[Fig 3]

[Fig 4]

[Fig 5]

[Fig 6]

[Fig 7]

[Fig 8]

[Fig 9]

[Fig 10]

[Fig 11]

[Fig 12]

[Fig 13]

[Fig 14]

[Fig 15]

[Fig 16]

[Fig 17]

[Fig 18]

[Fig 19]

[Fig 20]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102017204037 A1
- DE 102009054594 A1
- EP 1640707 A1
- WO 2019020326 A

**Littérature non-brevet citée dans la description**

- **A. BESCOND** ; **J. YON** ; **F.-X. OUF** ; **C. ROZÉ** ; **A. COPPALLE** ; **P. PARENT** ; **D. FERRY** ; **C. LAFFON**. Soot optical properties determined by analyzing extinction spectra in the visible near-UV: Toward an optical spéciation according to constituents and structure. *Journal of Aerosol Science*, 2016, vol. 101, ISSN 0021-8502, 118-132, https://doi.Org/10.1016/j.jaerosci.2016.08.001

- **FARIAS, T. L.** ; **KÖYLÜ, Ü. Ö.** ; **CARVALHO, M. D. G.** Range of validity of the Rayleigh-Debye-Gans theory for optics of fractal aggregates. *Applied optics*, 1996, vol. 35 (33), 6560-6567